# EUROPEAN PATENT APPLICATION

(11) **EP 3 121 779 A1**
(43) Date of publication of application: **25.01.2017**
(21) Application number: 16000396.8
(22) Date of filing: 17.02.2016
(51) Int. Cl.: G06Q 20/36, G06Q 20/32, G06Q 20/40, G06Q 20/12, G06F 1/16, H04M 1/02, H04M 1/725

(54) **MOBILE TERMINAL AND PAYMENT METHOD USING EXTENDED DISPLAY AND FINGER SCAN THEREOF**

(30) Priority: 21.07.2015 KR 20150103299
(71) Applicant: LG Electronics Inc., Seoul 07336 (KR)
(72) Inventor: Mhun, Yunjueng, 06772 Seoul (KR); Park, Sinyoung, 06772 Seoul (KR); Cheon, Sunhee, 06772 Seoul (KR); Choi, Jeongeun, 06772 Seoul (KR); Yoon, Sungyoung, 06772 Seoul (KR); KIM, Yoonhee, 06772 Seoul (KR)
(74) Representative: Beyer, Andreas

(57) **Abstract**

A mobile terminal including a main display; an extended display extended to at least one side of the main display, and forming a single display together with the main display; a fingerprint input unit configured to input a fingerprint; and a controller configured to deactivate the main display, and display payment-related information related to a payment made with the mobile terminal on the extended display while maintaining the deactivation of the main display, in response to a fingerprint input on the fingerprint input unit.

## Description

### BACKGROUND OF THE INVENTION

### 1. Field of the Invention

The present invention relates to a mobile terminal capable of effectively executing online and offline payments using an extended display and a finger scan, and a payment method using the same.

### 2. Background of the Invention

Terminals may be generally classified as mobile/portable terminals or stationary terminals. Mobile terminals may also be classified as handheld terminals or vehicle mounted terminals. Mobile terminals have become increasingly more functional. Examples of such functions include data and voice communications, capturing images and video via a camera, recording audio, playing music files via a speaker system, and displaying images and video on a display.

Some mobile terminals include additional functionality which supports game playing, while other terminals are configured as multimedia players. More recently, mobile terminals have been configured to receive broadcast and multicast signals which permit viewing of content such as videos and television programs. Efforts are ongoing to support and increase the functionality of mobile terminals. Such efforts include software and hardware improvements, as well as changes and improvements in the structural components.

Generally, when a display unit is activated, an entire region of a screen is activated, and nearly the same amount of power is consumed. As an activation time of the display unit becomes longer, the amount of power consumed by a battery is more increased.

### SUMMARY OF THE INVENTION

Therefore, an aspect of the detailed description is to provide a mobile terminal capable of effectively executing online and offline payments using an extended display and a finger scan, and a payment method using the same.

Another aspect of the detailed description is to provide a mobile terminal capable of reducing power consumption by a battery, by displaying payment-related information on an extended display for online and offline payments, and a payment method using the same.

Another aspect of the detailed description is to provide a mobile terminal capable of providing traffic information on an extended display, based on a moving path and position information of a user, for a transportation fare payment, and a payment method using the same.

To achieve these and other advantages and in accordance with the purpose of this specification, as embodied and broadly described herein, there is provided a mobile terminal, including: a main display; an extended display extended to at least one side of the main display, and forming a single display together with the main display; a fingerprint input unit configured to input a fingerprint; and a controller configured to display different payment-related information on the extended display, according to a type of a fingerprint input through the fingerprint input unit.

To achieve these and other advantages and in accordance with the purpose of this specification, as embodied and broadly described herein, there is also provided a payment method of a mobile terminal including a main display and an extended display extended to at least one side of the main display, the method including: registering payment methods by fingerprint; upon request for payment, recognizing a fingerprint of a user; checking the registered payment method based on the recognized fingerprint, and displaying the checked payment method on the extended display; and executing a payment using the payment method displayed on the extended display.

Further scope of applicability of the present application will become more apparent from the detailed description given hereinafter. However, it should be understood that the detailed description and specific examples, while indicating preferred embodiments of the invention, are given by way of illustration only, since various changes and modifications within the spirit and scope of the invention will become apparent to those skilled in the art from the detailed description.

### BRIEF DESCRIPTION OF THE DRAWINGS

The accompanying drawings, which are included to provide a further understanding of the invention and are incorporated in and constitute a part of this specification, illustrate exemplary embodiments and together with the description serve to explain the principles of the invention.

In the drawings:
FIG. 1A is a block diagram of a mobile terminal according to an embodiment of the present disclosure;
FIGS. 1B and 1C are conceptual views of one example of the mobile terminal, viewed from different directions;
FIG. 2 is a conceptual view of a mobile terminal according to an embodiment of the present invention, which is viewed from a front surface;
FIGS. 3A and 3B are frontal views illustrating a light guiding plate and an optical source which constitute a display unit according to an embodiment of the present invention;
FIGS. 4 and 5 are IC circuits for controlling main optical sources and a supplementary optical source;
FIGS. 6 and 7 are views illustrating waveforms of signals applied to a liquid crystal panel of a mobile terminal according to an embodiment of the present invention;
FIG. 8 is a flowchart illustrating a payment method using an extended display of a mobile terminal according to an embodiment of the present invention;
FIG. 9 is a view illustrating an embodiment to display payment related information using an extended display of a mobile terminal according to an embodiment of the present invention;
FIGS. 10A and 10B are views illustrating an embodiment to feedback an exceeded state of a preset accumulated amount of money, through an extended display;
FIG. 11 is a view illustrating an embodiment to feedback an exceeded state of a preset individual amount of money, through an extended display;
FIG. 12 is a view illustrating card selection and payment using an extended display and a finger scan;
FIG. 13 is a view illustrating an embodiment to use an additional option when performing a card payment using an extended display and a finger scan;
FIG. 14 is a view illustrating an embodiment to select a payment method using an extended display and a finger scan;
FIGS. 15A and 15B are views illustrating an embodiment to edit a payment card through an extended display according to an embodiment of the present invention;
FIG. 16 is a view illustrating an embodiment to execute payment using a bar code according to an embodiment of the present invention;
FIGS. 17A to 17C are views illustrating an embodiment to recommend a payment mechanism on an extended display when executing a card payment;
FIGS. 18A and 18B are views illustrating another embodiment to recommend a payment mechanism on an extended display, in correspondence to a card payment request method;
FIG. 19 is a view illustrating an embodiment to display bio information sensed through a finger scan, on an extended display;
FIG. 20 is a view illustrating an embodiment to provide traffic information on a destination, on an extended display according to an embodiment of the present invention;
FIG. 21 is a view illustrating an embodiment to provide traffic information on a destination including a transfer station, on an extended display according to an embodiment of the present invention;
FIG. 22 is a view illustrating an embodiment to check details on payment through a finger scan;
FIG. 23 is a flowchart illustrating registration of payment methods by fingerprint, in a mobile terminal according to an embodiment of the present invention;
FIG. 24 is a flowchart illustrating a payment method using an extended display and a finger scan, in a mobile terminal according to an embodiment of the present invention;
FIG. 25 is a view illustrating an embodiment to execute a bar code payment through a finger scan according to an embodiment of the present invention;
FIG. 26 is a view illustrating an embodiment to execute a signature payment through a fingerprint according to an embodiment of the present invention;
FIG. 27 is a view illustrating an embodiment to execute an Internet payment through a finger scan according to an embodiment of the present invention;
FIGS. 28A and 28B are views illustrating an embodiment to execute both a locked state releasing function and a payment screen displaying function, through a finger scan according to an embodiment of the present invention;
FIG. 29 is a view illustrating an embodiment to enter a lock screen using an extended display according to an embodiment of the present invention;
FIG. 30 is a view illustrating an embodiment to enter a lock screen and to release a locked state of the lock screen using an extended display according to an embodiment of the present invention; and
FIG. 31 a view illustrating an embodiment to check notification information using an extended display according to an embodiment of the present invention.

### DETAILED DESCRIPTION OF THE INVENTION

Description will now be given in detail according to exemplary embodiments disclosed herein, with reference to the accompanying drawings. For the sake of brief description with reference to the drawings, the same or equivalent components may be provided with the same or similar reference numbers, and description thereof will not be repeated. In general, a suffix such as "module" and "unit" may be used to refer to elements or components. Use of such a suffix herein is merely intended to facilitate description of the specification, and the suffix itself is not intended to give any special meaning or function. In the present disclosure, that which is well-known to one of ordinary skill in the relevant art has generally been omitted for the sake of brevity. The accompanying drawings are used to help easily understand various technical features and it should be understood that the embodiments presented herein are not limited by the accompanying drawings. As such, the present disclosure should be construed to extend to any alterations, equivalents and substitutes in addition to those which are particularly set out in the accompanying drawings.

Although the terms first, second, etc. may be used herein to describe various elements, these elements should not be limited by these terms. These terms are generally only used to distinguish one element from another. When an element is referred to as being "connected with" another element, the element can be connected with the other element or intervening elements may also be present. In contrast, when an element is referred to as being "directly connected with" another element, there are no intervening elements present.

A singular representation may include a plural representation unless it represents a definitely different meaning from the context. Terms such as "include" or "has" are used herein and should be understood that they are intended to indicate an existence of several components, functions or steps, disclosed in the specification, and it is also understood that greater or fewer components, functions, or steps may likewise be utilized.

Mobile terminals presented herein may be implemented using a variety of different types of terminals. Examples of such terminals include cellular phones, smart phones, user equipment, laptop computers, digital broadcast terminals, personal digital assistants (PDAs), portable multimedia players (PMPs), navigators, portable computers (PCs), slate PCs, tablet PCs, ultra books, wearable devices (for example, smart watches, smart glasses, head mounted displays (HMDs)), and the like.

By way of non-limiting example only, further description will be made with reference to particular types of mobile terminals. However, such teachings apply equally to other types of terminals, such as those types noted above. In addition, these teachings may also be applied to stationary terminals such as digital TV, desktop computers, and the like.

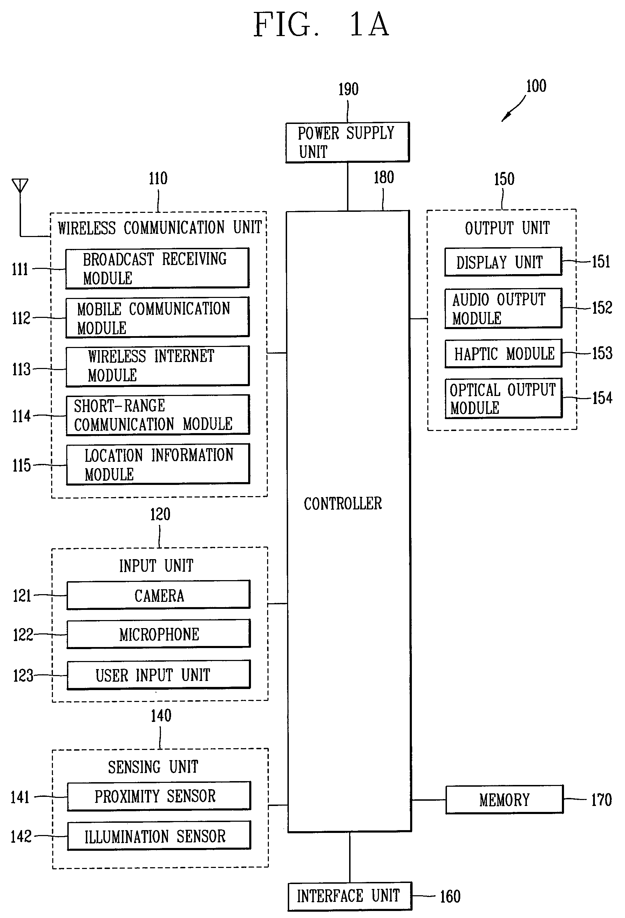

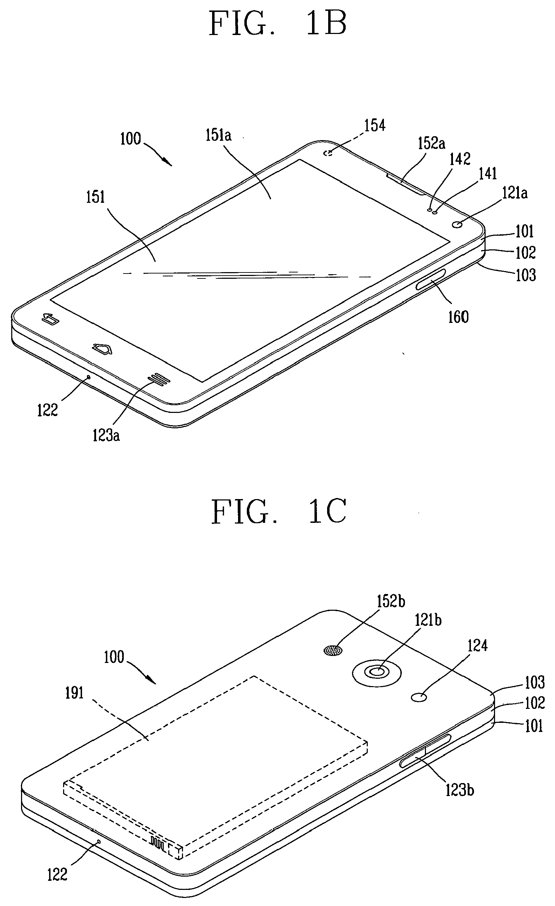

Reference is now made to FIGS. 1A-1C, where FIG. 1A is a block diagram of a mobile terminal in accordance with the present disclosure, and FIGS. 1B and 1C are conceptual views of one example of the mobile terminal, viewed from different directions. The mobile terminal 100 is shown having components such as a wireless communication unit 110, an input unit 120, a sensing unit 140, an output unit 150, an interface unit 160, a memory 170, a controller 180, and a power supply unit 190. Implementing all of the illustrated components is not a requirement, and that greater or fewer components may alternatively be implemented.

Referring now to FIG. 1A, the mobile terminal 100 is shown having wireless communication unit 110 configured with several commonly implemented components. For instance, the wireless communication unit 110 typically includes one or more components which permit wireless communication between the mobile terminal 100 and a wireless communication system or network within which the mobile terminal is located. The wireless communication unit 110 typically includes one or more modules which permit communications such as wireless communications between the mobile terminal 100 and a wireless communication system, communications between the mobile terminal 100 and another mobile terminal, communications between the mobile terminal 100 and an external server. Further, the wireless communication unit 110 typically includes one or more modules which connect the mobile terminal 100 to one or more networks. To facilitate such communications, the wireless communication unit 110 includes one or more of a broadcast receiving module 111, a mobile communication module 112, a wireless Internet module 113, a short-range communication module 114, and a location information module 115.

The input unit 120 includes a camera 121 for obtaining images or video, a microphone 122, which is one type of audio input device for inputting an audio signal, and a user input unit 123 (for example, a touch key, a push key, a mechanical key, a soft key, and the like) for allowing a user to input information. Data (for example, audio, video, image, and the like) is obtained by the input unit 120 and may be analyzed and processed by controller 180 according to device parameters, user commands, and combinations thereof.

The sensing unit 140 is typically implemented using one or more sensors configured to sense internal information of the mobile terminal, the surrounding environment of the mobile terminal, user information, and the like. For example, in FIG. 1A, the sensing unit 140 is shown having a proximity sensor 141 and an illumination sensor 142.

If desired, the sensing unit 140 may alternatively or additionally include other types of sensors or devices, such as a touch sensor, an acceleration sensor, a magnetic sensor, a G-sensor, a gyroscope sensor, a motion sensor, an RGB sensor, an infrared (IR) sensor, a finger scan sensor, a ultrasonic sensor, an optical sensor (for example, camera 121), a microphone 122, a battery gauge, an environment sensor (for example, a barometer, a hygrometer, a thermometer, a radiation detection sensor, a thermal sensor, and a gas sensor, among others), and a chemical sensor (for example, an electronic nose, a health care sensor, a biometric sensor, and the like), to name a few. The mobile terminal 100 may be configured to utilize information obtained from sensing unit 140, and in particular, information obtained from one or more sensors of the sensing unit 140, and combinations thereof.

The output unit 150, configured to generate an output in a visible, audible or tactile manner, may include at least one of a display unit 151, an audio output unit 152, a haptic module 153 and an optical output unit 154. The display unit 151 may have a layered structure with a touch sensor, or may be integrally formed with a touch sensor, thereby implementing a touch screen. The touch screen may serve as the user input unit 123 for providing an input interface between the mobile terminal 100 and a user, or may provide an output interface between the mobile terminal 100 and a user.

The interface unit 160 serves as an interface with various types of external devices that can be coupled to the mobile terminal 100. The interface unit 160, for example, may include any of wired or wireless ports, external power supply ports, wired or wireless data ports, memory card ports, ports for connecting a device having an identification module, audio input/output (I/O) ports, video I/O ports, earphone ports, and the like. In some cases, the mobile terminal 100 may perform assorted control functions associated with a connected external device, in response to the external device being connected to the interface unit 160.

The memory 170 is typically implemented to store data to support various functions or features of the mobile terminal 100. For instance, the memory 170 may be configured to store application programs executed in the mobile terminal 100, data or instructions for operations of the mobile terminal 100, and the like. Some of these application programs may be downloaded from an external server via wireless communication. Other application programs may be installed within the mobile terminal 100 at time of manufacturing or shipping, which is typically the case for basic functions of the mobile terminal 100 (for example, receiving a call, placing a call, receiving a message, sending a message, and the like). It is common for application programs to be stored in the memory 170, installed in the mobile terminal 100, and executed by the controller 180 to perform an operation (or function) for the mobile terminal 100.

The controller 180 typically functions to control overall operation of the mobile terminal 100, in addition to the operations associated with the application programs. The controller 180 can provide or process information or functions appropriate for a user by processing signals, data, information and the like, which are input or output by the various components depicted in Fig. 1A, or activating application programs stored in the memory 170. As one example, the controller 180 controls some or all of the components illustrated in FIGS. 1A-1C according to the execution of an application program that have been stored in the memory 170.

The power supply unit 190 can be configured to receive external power or provide internal power in order to supply appropriate power required for operating elements and components included in the mobile terminal 100. The power supply unit 190 may include a battery, and the battery may be configured to be embedded in the terminal body, or configured to be detachable from the terminal body.

Referring still to FIG. 1A, various components depicted in this figure will now be described in more detail. Regarding the wireless communication unit 110, the broadcast receiving module 111 is typically configured to receive a broadcast signal and/or broadcast associated information from an external broadcast managing entity via a broadcast channel. The broadcast channel may include a satellite channel, a terrestrial channel, or both. In some embodiments, two or more broadcast receiving modules 111 may be utilized to facilitate simultaneously receiving of two or more broadcast channels, or to support switching among broadcast channels.

The mobile communication module 112 can transmit and/or receive wireless signals to and from one or more network entities. Typical examples of a network entity include a base station, an external mobile terminal, a server, and the like. Such network entities form part of a mobile communication network, which is constructed according to technical standards or communication methods for mobile communications (for example, Global System for Mobile Communication (GSM), Code Division Multi Access (CDMA), CDMA2000 (Code Division Multi Access 2000), EV-DO (Enhanced Voice-Data Optimized or Enhanced Voice-Data Only), Wideband CDMA (WCDMA), High Speed Downlink Packet access (HSDPA), HSUPA (High Speed Uplink Packet Access), Long Term Evolution (LTE), LTE-A (Long Term Evolution-Advanced), and the like). Examples of wireless signals transmitted and/or received via the mobile communication module 112 include audio call signals, video (telephony) call signals, or various formats of data to support communication of text and multimedia messages.

The wireless Internet module 113 is configured to facilitate wireless Internet access. This module may be internally or externally coupled to the mobile terminal 100. The wireless Internet module 113 may transmit and/or receive wireless signals via communication networks according to wireless Internet technologies.

Examples of such wireless Internet access include Wireless LAN (WLAN), Wireless Fidelity (Wi-Fi), Wi-Fi Direct, Digital Living Network Alliance (DLNA), Wireless Broadband (WiBro), Worldwide Interoperability for Microwave Access (WiMAX), High Speed Downlink Packet Access (HSDPA), HSUPA (High Speed Uplink Packet Access), Long Term Evolution (LTE), LTE-A (Long Term Evolution-Advanced), and the like. The wireless Internet module 113 may transmit/receive data according to one or more of such wireless Internet technologies, and other Internet technologies as well.

In some embodiments, when the wireless Internet access is implemented according to, for example, WiBro, HSDPA,HSUPA, GSM, CDMA, WCDMA, LTE, LTE-A and the like, as part of a mobile communication network, the wireless Internet module 113 performs such wireless Internet access. As such, the Internet module 113 may cooperate with, or function as, the mobile communication module 112.

The short-range communication module 114 is configured to facilitate short-range communications. Suitable technologies for implementing such short-range communications include BLUETOOTH™, Radio Frequency IDentification (RFID), Infrared Data Association (IrDA), Ultra-WideBand (UWB), ZigBee, Near Field Communication (NFC), Wireless-Fidelity (Wi-Fi), Wi-Fi Direct, Wireless USB (Wireless Universal Serial Bus), and the like. The short-range communication module 114 in general supports wireless communications between the mobile terminal 100 and a wireless communication system, communications between the mobile terminal 100 and another mobile terminal 100, or communications between the mobile terminal and a network where another mobile terminal 100 (or an external server) is located, via wireless area networks. One example of the wireless area networks is a wireless personal area networks.

In some embodiments, another mobile terminal (which may be configured similarly to mobile terminal 100) may be a wearable device, for example, a smart watch, a smart glass or a head mounted display (HMD), which can exchange data with the mobile terminal 100 (or otherwise cooperate with the mobile terminal 100). The short-range communication module 114 may sense or recognize the wearable device, and permit communication between the wearable device and the mobile terminal 100. In addition, when the sensed wearable device is a device which is authenticated to communicate with the mobile terminal 100, the controller 180, for example, may cause transmission of data processed in the mobile terminal 100 to the wearable device via the short-range communication module 114. Hence, a user of the wearable device may use the data processed in the mobile terminal 100 on the wearable device. For example, when a call is received in the mobile terminal 100, the user can answer the call using the wearable device. Also, when a message is received in the mobile terminal 100, the user can check the received message using the wearable device.

The location information module 115 is generally configured to detect, calculate, derive or otherwise identify a position of the mobile terminal. As an example, the location information module 115 includes a Global Position System (GPS) module, a Wi-Fi module, or both. If desired, the location information module 115 may alternatively or additionally function with any of the other modules of the wireless communication unit 110 to obtain data related to the position of the mobile terminal.

As one example, when the mobile terminal uses a GPS module, a position of the mobile terminal may be acquired using a signal sent from a GPS satellite. As another example, when the mobile terminal uses the Wi-Fi module, a position of the mobile terminal can be acquired based on information related to a wireless access point (AP) which transmits or receives a wireless signal to or from the Wi-Fi module.

The input unit 120 may be configured to permit various types of input to the mobile terminal 120. Examples of such input include audio, image, video, data, and user input. Image and video input is often obtained using one or more cameras 121. Such cameras 121 may process image frames of still pictures or video obtained by image sensors in a video or image capture mode. The processed image frames can be displayed on the display unit 151 or stored in memory 170. In some cases, the cameras 121 may be arranged in a matrix configuration to permit a plurality of images having various angles or focal points to be input to the mobile terminal 100. As another example, the cameras 121 may be located in a stereoscopic arrangement to acquire left and right images for implementing a stereoscopic image.

The microphone 122 is generally implemented to permit audio input to the mobile terminal 100. The audio input can be processed in various manners according to a function being executed in the mobile terminal 100. If desired, the microphone 122 may include assorted noise removing algorithms to remove unwanted noise generated in the course of receiving the external audio.

The user input unit 123 is a component that permits input by a user. Such user input may enable the controller 180 to control operation of the mobile terminal 100. The user input unit 123 may include one or more of a mechanical input element (for example, a key, a button located on a front and/or rear surface or a side surface of the mobile terminal 100, a dome switch, a jog wheel, a jog switch, and the like), or a touch-sensitive input, among others. As one example, the touch-sensitive input may be a virtual key or a soft key, which is displayed on a touch screen through software processing, or a touch key which is located on the mobile terminal at a location that is other than the touch screen. Further, the virtual key or the visual key may be displayed on the touch screen in various shapes, for example, graphic, text, icon, video, or a combination thereof.

The sensing unit 140 is generally configured to sense one or more of internal information of the mobile terminal, surrounding environment information of the mobile terminal, user information, or the like. The controller 180 generally cooperates with the sending unit 140 to control operation of the mobile terminal 100 or execute data processing, a function or an operation associated with an application program installed in the mobile terminal based on the sensing provided by the sensing unit 140. The sensing unit 140 may be implemented using any of a variety of sensors, some of which will now be described in more detail.

The proximity sensor 141 may include a sensor to sense presence or absence of an object approaching a surface, or an object located near a surface, by using an electromagnetic field, infrared rays, or the like without a mechanical contact. The proximity sensor 141 may be arranged at an inner region of the mobile terminal covered by the touch screen, or near the touch screen.

The proximity sensor 141, for example, may include any of a transmissive type photoelectric sensor, a direct reflective type photoelectric sensor, a mirror reflective type photoelectric sensor, a high-frequency oscillation proximity sensor, a capacitance type proximity sensor, a magnetic type proximity sensor, an infrared rays proximity sensor, and the like. When the touch screen is implemented as a capacitance type, the proximity sensor 141 can sense proximity of a pointer relative to the touch screen by changes of an electromagnetic field, which is responsive to an approach of an object with conductivity. In this instance, the touch screen (touch sensor) may also be categorized as a proximity sensor.

The term "proximity touch" will often be referred to herein to denote the scenario in which a pointer is positioned to be proximate to the touch screen without contacting the touch screen. The term "contact touch" will often be referred to herein to denote the scenario in which a pointer makes physical contact with the touch screen. For the position corresponding to the proximity touch of the pointer relative to the touch screen, such position will correspond to a position where the pointer is perpendicular to the touch screen. The proximity sensor 141 may sense proximity touch, and proximity touch patterns (for example, distance, direction, speed, time, position, moving status, and the like).

In general, controller 180 processes data corresponding to proximity touches and proximity touch patterns sensed by the proximity sensor 141, and cause output of visual information on the touch screen. In addition, the controller 180 can control the mobile terminal 100 to execute different operations or process different data according to whether a touch with respect to a point on the touch screen is either a proximity touch or a contact touch. A touch sensor can sense a touch applied to the touch screen, such as display unit 151, using any of a variety of touch methods. Examples of such touch methods include a resistive type, a capacitive type, an infrared type, and a magnetic field type, among others.

As one example, the touch sensor may be configured to convert changes of pressure applied to a specific part of the display unit 151, or convert capacitance occurring at a specific part of the display unit 151, into electric input signals. The touch sensor may also be configured to sense not only a touched position and a touched area, but also touch pressure and/or touch capacitance. A touch object is generally used to apply a touch input to the touch sensor. Examples of typical touch objects include a finger, a touch pen, a stylus pen, a pointer, or the like.

When a touch input is sensed by a touch sensor, corresponding signals may be transmitted to a touch controller. The touch controller may process the received signals, and then transmit corresponding data to the controller 180. Accordingly, the controller 180 can sense which region of the display unit 151 has been touched. Here, the touch controller may be a component separate from the controller 180, the controller 180, and combinations thereof.

In some embodiments, the controller 180 can execute the same or different controls according to a type of touch object that touches the touch screen or a touch key provided in addition to the touch screen. Whether to execute the same or different control according to the object which provides a touch input may be decided based on a current operating state of the mobile terminal 100 or a currently executed application program, for example.

The touch sensor and the proximity sensor may be implemented individually, or in combination, to sense various types of touches. Such touches includes a short (or tap) touch, a long touch, a multi-touch, a drag touch, a flick touch, a pinch-in touch, a pinch-out touch, a swipe touch, a hovering touch, and the like.

If desired, an ultrasonic sensor may be implemented to recognize position information relating to a touch object using ultrasonic waves. The controller 180, for example, may calculate a position of a wave generation source based on information sensed by an illumination sensor and a plurality of ultrasonic sensors. Since light is much faster than ultrasonic waves, the time for which the light reaches the optical sensor is much shorter than the time for which the ultrasonic wave reaches the ultrasonic sensor. The position of the wave generation source may be calculated using this fact. For instance, the position of the wave generation source may be calculated using the time difference from the time that the ultrasonic wave reaches the sensor based on the light as a reference signal.

The camera 121 typically includes at least one a camera sensor (CCD, CMOS etc.), a photo sensor (or image sensors), and a laser sensor. Implementing the camera 121 with a laser sensor allows detection of a touch of a physical object with respect to a 3D stereoscopic image. The photo sensor may be laminated on, or overlapped with, the display device. The photo sensor may be configured to scan movement of the physical object in proximity to the touch screen. In more detail, the photo sensor may include photo diodes and transistors at rows and columns to scan content received at the photo sensor using an electrical signal which changes according to the quantity of applied light. Namely, the photo sensor may calculate the coordinates of the physical object according to variation of light to thus obtain position information of the physical object.

The display unit 151 is generally configured to output information processed in the mobile terminal 100. For example, the display unit 151 may display execution screen information of an application program executing at the mobile terminal 100 or user interface (UI) and graphic user interface (GUI) information in response to the execution screen information. In some embodiments, the display unit 151 may be implemented as a stereoscopic display unit for displaying stereoscopic images. A typical stereoscopic display unit may employ a stereoscopic display scheme such as a stereoscopic scheme (a glass scheme), an auto-stereoscopic scheme (glassless scheme), a projection scheme (holographic scheme), or the like.

The audio output module 152 is generally configured to output audio data. Such audio data may be obtained from any of a number of different sources, such that the audio data may be received from the wireless communication unit 110 or may have been stored in the memory 170. The audio data may be output during modes such as a signal reception mode, a call mode, a record mode, a voice recognition mode, a broadcast reception mode, and the like. The audio output module 152 can provide audible output related to a particular function (e.g., a call signal reception sound, a message reception sound, etc.) performed by the mobile terminal 100. The audio output module 152 may also be implemented as a receiver, a speaker, a buzzer, or the like.

A haptic module 153 can be configured to generate various tactile effects that a user feels, perceive, or otherwise experience. A typical example of a tactile effect generated by the haptic module 153 is vibration. The strength, pattern and the like of the vibration generated by the haptic module 153 can be controlled by user selection or setting by the controller. For example, the haptic module 153 may output different vibrations in a combining manner or a sequential manner.

Besides vibration, the haptic module 153 can generate various other tactile effects, including an effect by stimulation such as a pin arrangement vertically moving to contact skin, a spray force or suction force of air through a jet orifice or a suction opening, a touch to the skin, a contact of an electrode, electrostatic force, an effect by reproducing the sense of cold and warmth using an element that can absorb or generate heat, and the like.

The haptic module 153 can also be implemented to allow the user to feel a tactile effect through a muscle sensation such as the user's fingers or arm, as well as transferring the tactile effect through direct contact. Two or more haptic modules 153 may be provided according to the particular configuration of the mobile terminal 100.

An optical output module 154 can output a signal for indicating an event generation using light of a light source. Examples of events generated in the mobile terminal 100 may include message reception, call signal reception, a missed call, an alarm, a schedule notice, an email reception, information reception through an application, and the like. A signal output by the optical output module 154 may be implemented so the mobile terminal emits monochromatic light or light with a plurality of colors. The signal output may be terminated as the mobile terminal senses that a user has checked the generated event, for example.

The interface unit 160 serves as an interface for external devices to be connected with the mobile terminal 100. For example, the interface unit 160 can receive data transmitted from an external device, receive power to transfer to elements and components within the mobile terminal 100, or transmit internal data of the mobile terminal 100 to such external device. The interface unit 160 may include wired or wireless headset ports, external power supply ports, wired or wireless data ports, memory card ports, ports for connecting a device having an identification module, audio input/output (I/O) ports, video I/O ports, earphone ports, or the like.

The identification module may be a chip that stores various information for authenticating authority of using the mobile terminal 100 and may include a user identity module (UIM), a subscriber identity module (SIM), a universal subscriber identity module (USIM), and the like. In addition, the device having the identification module (also referred to herein as an "identifying device") may take the form of a smart card. Accordingly, the identifying device can be connected with the terminal 100 via the interface unit 160.

When the mobile terminal 100 is connected with an external cradle, the interface unit 160 can serve as a passage to allow power from the cradle to be supplied to the mobile terminal 100 or may serve as a passage to allow various command signals input by the user from the cradle to be transferred to the mobile terminal there through. Various command signals or power input from the cradle may operate as signals for recognizing that the mobile terminal is properly mounted on the cradle.

The memory 170 can store programs to support operations of the controller 180 and store input/output data (for example, phonebook, messages, still images, videos, etc.). The memory 170 may store data related to various patterns of vibrations and audio which are output in response to touch inputs on the touch screen.

The memory 170 may include one or more types of storage mediums including a Flash memory, a hard disk, a solid state disk, a silicon disk, a multimedia card micro type, a card-type memory (e.g., SD or DX memory, etc.), a Random Access Memory (RAM), a Static Random Access Memory (SRAM), a Read-Only Memory (ROM), an Electrically Erasable Programmable Read-Only Memory (EEPROM), a Programmable Read-Only memory (PROM), a magnetic memory, a magnetic disk, an optical disk, and the like. The mobile terminal 100 may also be operated in relation to a network storage device that performs the storage function of the memory 170 over a network, such as the Internet.

The controller 180 can typically control the general operations of the mobile terminal 100. For example, the controller 180 can set or release a lock state for restricting a user from inputting a control command with respect to applications when a status of the mobile terminal meets a preset condition.

The controller 180 can also perform the controlling and processing associated with voice calls, data communications, video calls, and the like, or perform pattern recognition processing to recognize a handwriting input or a picture drawing input performed on the touch screen as characters or images, respectively. In addition, the controller 180 can control one or a combination of those components in order to implement various exemplary embodiments disclosed herein.

The power supply unit 190 receives external power or provide internal power and supply the appropriate power required for operating respective elements and components included in the mobile terminal 100. The power supply unit 190 may include a battery, which is typically rechargeable or be detachably coupled to the terminal body for charging.

The power supply unit 190 may include a connection port. The connection port may be configured as one example of the interface unit 160 to which an external charger for supplying power to recharge the battery is electrically connected. As another example, the power supply unit 190 may be configured to recharge the battery in a wireless manner without use of the connection port.

In this example, the power supply unit 190 can receive power, transferred from an external wireless power transmitter, using at least one of an inductive coupling method which is based on magnetic induction or a magnetic resonance coupling method which is based on electromagnetic resonance. Various embodiments described herein may be implemented in a computer-readable medium, a machine-readable medium, or similar medium using, for example, software, hardware, or any combination thereof.

Referring now to FIGS. 1B and 1C, the mobile terminal 100 is described with reference to a bar-type terminal body. However, the mobile terminal 100 may alternatively be implemented in any of a variety of different configurations. Examples of such configurations include watch-type, clip-type, glasses-type, or as a folder-type, flip-type, slide-type, swing-type, and swivel-type in which two and more bodies are combined with each other in a relatively movable manner, and combinations thereof. Discussion herein will often relate to a particular type of mobile terminal (for example, bar-type, watch-type, glasses-type, and the like). However, such teachings with regard to a particular type of mobile terminal will generally apply to other types of mobile terminals as well.

The mobile terminal 100 will generally include a case (for example, frame, housing, cover, and the like) forming the appearance of the terminal. In this embodiment, the case is formed using a front case 101 and a rear case 102. Various electronic components are incorporated into a space formed between the front case 101 and the rear case 102. At least one middle case may be additionally positioned between the front case 101 and the rear case 102.

The display unit 151 is shown located on the front side of the terminal body to output information. As illustrated, a window 151a of the display unit 151 may be mounted to the front case 101 to form the front surface of the terminal body together with the front case 101. In some embodiments, electronic components may also be mounted to the rear case 102. Examples of such electronic components include a detachable battery 191, an identification module, a memory card, and the like. Rear cover 103 is shown covering the electronic components, and this cover may be detachably coupled to the rear case 102. Therefore, when the rear cover 103 is detached from the rear case 102, the electronic components mounted to the rear case 102 are externally exposed.

As illustrated, when the rear cover 103 is coupled to the rear case 102, a side surface of the rear case 102 is partially exposed. In some cases, upon the coupling, the rear case 102 may also be completely shielded by the rear cover 103. In some embodiments, the rear cover 103 may include an opening for externally exposing a camera 121b or an audio output module 152b.

The cases 101, 102, 103 may be formed by injection-molding synthetic resin or may be formed of a metal, for example, stainless steel (STS), aluminum (Al), titanium (Ti), or the like. As an alternative to the example in which the plurality of cases form an inner space for accommodating components, the mobile terminal 100 may be configured such that one case forms the inner space. In this example, a mobile terminal 100 having a uni-body is formed so synthetic resin or metal extends from a side surface to a rear surface.

If desired, the mobile terminal 100 may include a waterproofing unit for preventing introduction of water into the terminal body. For example, the waterproofing unit may include a waterproofing member which is located between the window 151a and the front case 101, between the front case 101 and the rear case 102, or between the rear case 102 and the rear cover 103, to hermetically seal an inner space when those cases are coupled.

FIGS. 1B and 1C depict certain components as arranged on the mobile terminal. However, alternative arrangements are possible and within the teachings of the instant disclosure. Some components may be omitted or rearranged. For example, the first manipulation unit 123a may be located on another surface of the terminal body, and the second audio output module 152b may be located on the side surface of the terminal body.

The display unit 151 outputs information processed in the mobile terminal 100. The display unit 151 may be implemented using one or more suitable display devices. Examples of such suitable display devices include a liquid crystal display (LCD), a thin film transistor-liquid crystal display (TFT-LCD), an organic light emitting diode (OLED), a flexible display, a 3-dimensional (3D) display, an e-ink display, and combinations thereof.

The display unit 151 may be implemented using two display devices, which can implement the same or different display technology. For instance, a plurality of the display units 151 may be arranged on one side, either spaced apart from each other, or these devices may be integrated, or these devices may be arranged on different surfaces.

The display unit 151 may also include a touch sensor which senses a touch input received at the display unit. When a touch is input to the display unit 151, the touch sensor may be configured to sense this touch and the controller 180, for example, may generate a control command or other signal corresponding to the touch. The content which is input in the touching manner may be a text or numerical value, or a menu item which can be indicated or designated in various modes.

The touch sensor may be configured in a form of a film having a touch pattern, disposed between the window 151a and a display on a rear surface of the window 151a, or a metal wire which is patterned directly on the rear surface of the window 151a. Alternatively, the touch sensor may be integrally formed with the display. For example, the touch sensor may be disposed on a substrate of the display or within the display.

The display unit 151 may also form a touch screen together with the touch sensor. Here, the touch screen may serve as the user input unit 123 (see FIG. 1A). Therefore, the touch screen may replace at least some of the functions of the first manipulation unit 123a.

The first audio output module 152a may be implemented in the form of a speaker to output voice audio, alarm sounds, multimedia audio reproduction, and the like. The window 151a of the display unit 151 will typically include an aperture to permit audio generated by the first audio output module 152a to pass. One alternative is to allow audio to be released along an assembly gap between the structural bodies (for example, a gap between the window 151a and the front case 101). In this instance, a hole independently formed to output audio sounds may not be seen or is otherwise hidden in terms of appearance, thereby further simplifying the appearance and manufacturing of the mobile terminal 100.

The optical output module 154 can be configured to output light for indicating an event generation. Examples of such events include a message reception, a call signal reception, a missed call, an alarm, a schedule notice, an email reception, information reception through an application, and the like. When a user has checked a generated event, the controller can control the optical output unit 154 to stop the light output.

The first camera 121a can process image frames such as still or moving images obtained by the image sensor in a capture mode or a video call mode. The processed image frames can then be displayed on the display unit 151 or stored in the memory 170.

The first and second manipulation units 123a and 123b are examples of the user input unit 123, which may be manipulated by a user to provide input to the mobile terminal 100. The first and second manipulation units 123a and 123b may also be commonly referred to as a manipulating portion, and may employ any tactile method that allows the user to perform manipulation such as touch, push, scroll, or the like. The first and second manipulation units 123a and 123b may also employ any non-tactile method that allows the user to perform manipulation such as proximity touch, hovering, or the like.

FIG. 1B illustrates the first manipulation unit 123a as a touch key, but possible alternatives include a mechanical key, a push key, a touch key, and combinations thereof. Input received at the first and second manipulation units 123a and 123b may be used in various ways. For example, the first manipulation unit 123a may be used by the user to provide an input to a menu, home key, cancel, search, or the like, and the second manipulation unit 123b may be used by the user to provide an input to control a volume level being output from the first or second audio output modules 152a or 152b, to switch to a touch recognition mode of the display unit 151, or the like.

As another example of the user input unit 123, a rear input unit may be located on the rear surface of the terminal body. The rear input unit can be manipulated by a user to provide input to the mobile terminal 100. The input may be used in a variety of different ways. For example, the rear input unit may be used by the user to provide an input for power on/off, start, end, scroll, control volume level being output from the first or second audio output modules 152a or 152b, switch to a touch recognition mode of the display unit 151, and the like. The rear input unit may be configured to permit touch input, a push input, or combinations thereof.

The rear input unit may be located to overlap the display unit 151 of the front side in a thickness direction of the terminal body. As one example, the rear input unit may be located on an upper end portion of the rear side of the terminal body such that a user can easily manipulate it using a forefinger when the user grabs the terminal body with one hand. Alternatively, the rear input unit can be positioned at most any location of the rear side of the terminal body.

Embodiments that include the rear input unit may implement some or all of the functionality of the first manipulation unit 123a in the rear input unit. As such, in situations where the first manipulation unit 123a is omitted from the front side, the display unit 151 can have a larger screen.

As a further alternative, the mobile terminal 100 may include a finger scan sensor which scans a user's fingerprint. The controller 180 can then use fingerprint information sensed by the finger scan sensor as part of an authentication procedure. The finger scan sensor may also be installed in the display unit 151 or implemented in the user input unit 123.

The microphone 122 is shown located at an end of the mobile terminal 100, but other locations are possible. If desired, multiple microphones may be implemented, with such an arrangement permitting the receiving of stereo sounds.

The interface unit 160 may serve as a path allowing the mobile terminal 100 to interface with external devices. For example, the interface unit 160 may include one or more of a connection terminal for connecting to another device (for example, an earphone, an external speaker, or the like), a port for near field communication (for example, an Infrared Data Association (IrDA) port, a Bluetooth port, a wireless LAN port, and the like), or a power supply terminal for supplying power to the mobile terminal 100. The interface unit 160 may be implemented in the form of a socket for accommodating an external card, such as Subscriber Identification Module (SIM), User Identity Module (UIM), or a memory card for information storage.

The second camera 121b is shown located at the rear side of the terminal body and includes an image capturing direction that is substantially opposite to the image capturing direction of the first camera unit 121a. If desired, second camera 121a may alternatively be located at other locations, or made to be moveable, in order to have a different image capturing direction from that which is shown.

The second camera 121b can include a plurality of lenses arranged along at least one line. The plurality of lenses may also be arranged in a matrix configuration. The cameras may be referred to as an "array camera." When the second camera 121b is implemented as an array camera, images may be captured in various manners using the plurality of lenses and images with better qualities.

As shown in FIG. 1C, a flash 124 is shown adjacent to the second camera 121b. When an image of a subject is captured with the camera 121b, the flash 124 may illuminate the subject. As shown in FIG. 1C, the second audio output module 152b can be located on the terminal body. The second audio output module 152b may implement stereophonic sound functions in conjunction with the first audio output module 152a, and may be also used for implementing a speaker phone mode for call communication.

At least one antenna for wireless communication may be located on the terminal body. The antenna may be installed in the terminal body or formed by the case. For example, an antenna which configures a part of the broadcast receiving module 111 may be retractable into the terminal body. Alternatively, an antenna may be formed using a film attached to an inner surface of the rear cover 103, or a case that includes a conductive material.

A power supply unit 190 for supplying power to the mobile terminal 100 may include a battery 191, which is mounted in the terminal body or detachably coupled to an outside of the terminal body. The battery 191 may receive power via a power source cable connected to the interface unit 160. Also, the battery 191 can be recharged in a wireless manner using a wireless charger. Wireless charging may be implemented by magnetic induction or electromagnetic resonance.

The rear cover 103 is shown coupled to the rear case 102 for shielding the battery 191, to prevent separation of the battery 191, and to protect the battery 191 from an external impact or from foreign material. When the battery 191 is detachable from the terminal body, the rear case 103 may be detachably coupled to the rear case 102.

An accessory for protecting an appearance or assisting or extending the functions of the mobile terminal 100 can also be provided on the mobile terminal 100. As one example of an accessory, a cover or pouch for covering or accommodating at least one surface of the mobile terminal 100 may be provided. The cover or pouch may cooperate with the display unit 151 to extend the function of the mobile terminal 100. Another example of the accessory is a touch pen for assisting or extending a touch input to a touch screen.

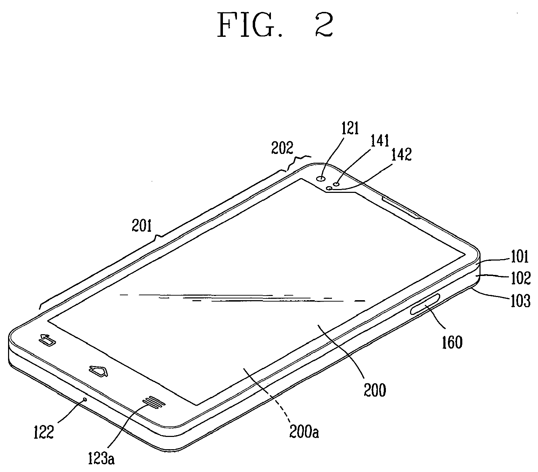

FIG. 2 is a conceptual view of a mobile terminal according to an embodiment of the present invention, which is viewed from a front surface. As shown in FIG. 2, the mobile terminal is provided with one or more display regions independently activated within a single display unit (or display panel). The one or more display regions form a window 200a. The display unit 200 which is partially activated/deactivated, is differentiated from the display unit 151 which is entirely activated/deactivated.

That is, the display unit 200 has a structure where one side of the display unit 151 shown in FIG. 1B is extended to a predetermined direction, e.g., an upper side on the same surface. FIG. 2 illustrates that one side of the display unit 151 is extended to an upper side on the same surface, for convenience. However, the present invention is not limited to this. That is, one side of the display unit 151 may be extended to another surface, i.e., a lower side surface, a right side surface, an upper surface, a lower surface, and a rear surface of the mobile terminal.

A first region 201 of the display unit 200 is a main region, which corresponds to the display unit 151 of FIG. 1B. And a second region 202 of the display unit 200 is an extended region. The two regions 201, 202 may be independently controlled by the controller 180. The extended region 202 is different from the main region 201 in shape and size. The shape and the size of the extended region 202 may be determined according to a surface where the extended region 202 is formed, and according to a purpose.

Thus, in an embodiment of the present invention, as one of the two regions 201, 202 is selectively activated according to a user's input or a type of information to be displayed, power consumption is reduced. For instance, general image information is displayed on the main region 201, and an occurred event or a status bar may be displayed on the extended region 202. Additional information may be displayed on the extended region 202, based on a type of an application displayed on the main region 201. When the main region 201 is in a deactivated state ('off' state), status information may be displayed on the extended region. On the contrary, when the main region 201 is in an activated state ('on' state), the status information is displayed on an upper part of the main region.

When the main region 201 is deactivated and the extended region 202 is activated according to a user's input, a state of the mobile terminal or a newly-occurred event may be output to the extended region 202. As shown, the extended region 202 may be formed to be smaller than or equal to the main region 201, in horizontal or vertical length. In an embodiment of the present invention, a horizontal length of the extended region 202 is shorter than a horizontal length of the main region 201.

In this instance, positions of some devices may be changed according to a formation position of the extended region 202. For instance, the camera 121, the proximity sensor 141, the illumination sensor 142, which have been positioned on a bezel portion at an upper side of the display unit 151, may be disposed on the left side of the extended region 202, as shown in FIG. 2.

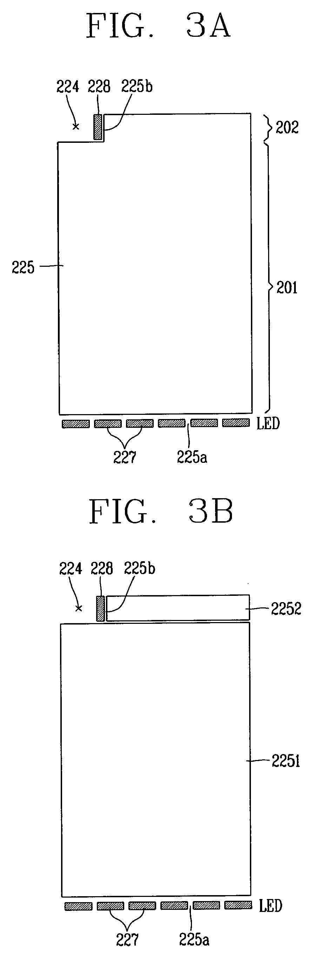

When the horizontal length of the extended region 202 is shorter than the horizontal length of the main region 201, at least one side of the display unit may have a rectangular shape, an inclined surface and a curved surface. FIG. 3 illustrates that the one side of the display unit has an inclined surface.

The display unit 200, a display panel, is largely divided into a liquid crystal panel and a backlight unit. The backlight unit serves to evenly distribute light provided from an optical source, to a front surface of the display unit, and includes an optical source, a light guiding plate, a polarizing plate, a diffusion plate and a reflector.

Next, FIGS. 3A and 3B are frontal views illustrating a light guiding plate and an optical source which constitute the display unit 200 according to an embodiment of the present invention. As shown in FIG. 3A, optical sources 227, 228 are disposed on a side surface of a light guiding plate 225, and provide light to the side surface of the light guiding plate 225.

The light guiding plate 225 diffuses light supplied from the optical sources 227, 228 therein, using a total reflection principle. The total reflection means that light incident with an incidence angle smaller than a threshold angle is irradiated in the light guiding plate 225. Light incident onto the side surface of the light guiding plate 225, with an incidence angle more than a threshold angle, is totally reflected and diffused in the light guiding plate 225. If the light is bent with an angle smaller than a threshold angle, the light is irradiated from the light guiding plate 225. FIG. 3 illustrates the main optical sources 227, the supplementary optical source 228, and the light guiding plate 225.

Unlike the related art backlight unit, the backlight unit 220 of the present invention is configured to provide light to the light guiding plate 225 through optical sources disposed in two directions. For instance, the plurality of main optical sources 227 disposed in parallel along a first side surface 225a of the light guiding plate 225 may evenly supply light onto an entire region of the light guiding plate 225.

The supplementary optical source 228 disposed on a second side surface 225b perpendicular to the first side surface 225a of the light guiding plate 225, may supply light to a partial region of the light guiding plate 225. The main optical sources 227 and the supplementary optical source 228 are independently operated. With such a configuration, when the main optical sources 227 are turned off, only the supplementary optical source 228 may be turned on.

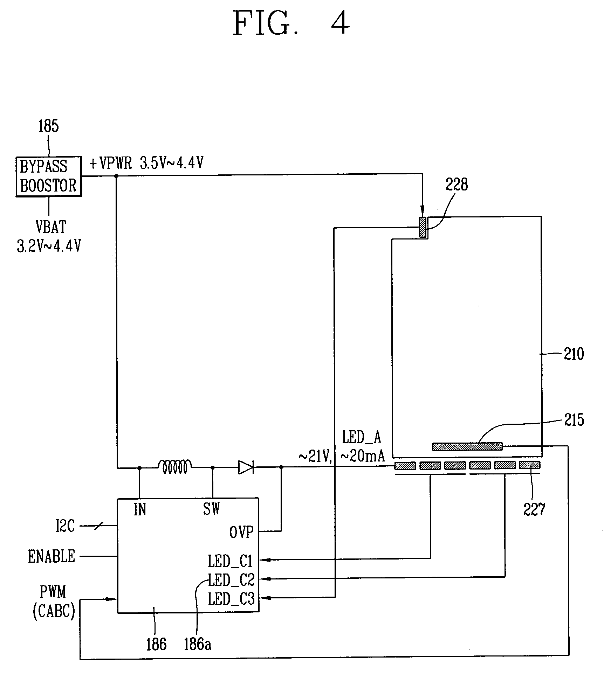

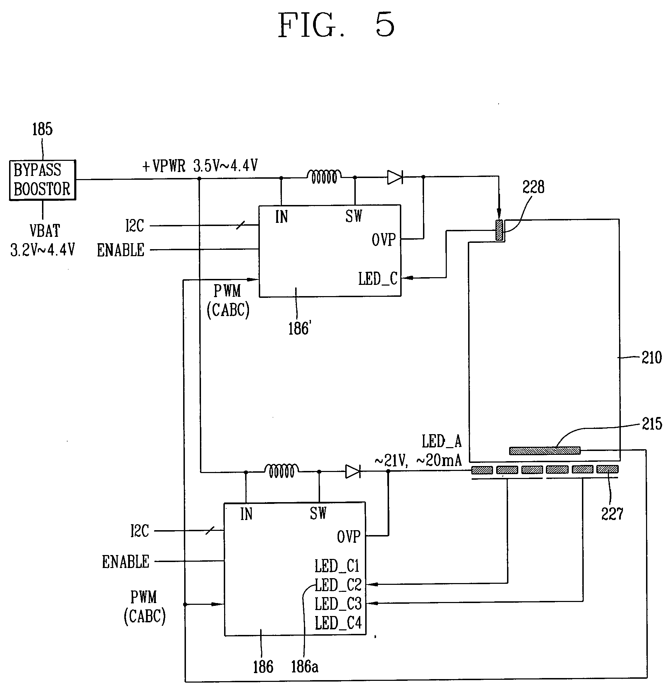

FIGS. 4 and 5 are IC circuits for controlling the main optical sources 227 and the supplementary optical source 228. Referring to FIG. 4, a single backlight IC 186 controls the main optical sources 227 and the supplementary optical source 228. Referring to FIG. 5, two backlight ICs 186 control the main optical sources 227 and the supplementary optical source 228, respectively.

Power (VBAT) supplied from the power supply unit 190, has noise removed therefrom through a bypass booster 187. Then, the power is made to be incident onto the backlight IC 186. The backlight IC 186 controls light to be irradiated from the optical sources 227, 228. The backlight IC 186 searches for an optimum backlight brightness for displaying an image, based on low data information of the image received from a driving IC 215 of a liquid crystal panel, thereby controlling brightness of each LED (CABC: Content Adaptive Brightness Control).

In case of using the single backlight IC 186, an LED channel 186a may be further used to control the supplementary optical source 228 (refer to FIG. 4). In this instance, an additional backlight IC 186' may be further provided to separately control the supplementary optical source 228 (refer to FIG. 5).

The main optical sources 227 are provided in plurality in parallel, close to the first side surface 225a, and supply light to an entire region of the light guiding plate 225. On the contrary, the supplementary optical source 228 is provided in one or two, with a smaller number than the main optical sources 227, and supplies light to a partial region of the light guiding plate 225.

In another embodiment of the present invention, as shown in FIG. 3B, the light guiding plate 225 may include a first light guiding plate 2251 configured to irradiate light supplied from the main optical sources 227 to a front surface of the display unit 200, and a second light guiding plate 2252 configured to irradiate light supplied from the supplementary optical source 228 to a front surface of the display unit 200.

When the light guiding plate 225 is implemented as an integral type as shown in FIG. 3A, the main optical sources 227 may supply light not only to the first region 201 (main region), but also to the second region 202 (extended region). With such a configuration, when the main optical sources 227 are turned on, the supplementary optical source 228 needs not be turned on. Further, a single image may be displayed on the second region 202 and the first region 201.

When the light guiding plate 225 is implemented as a separated type as shown in FIG. 3B, the main optical sources 227 supply light only to the first region 201 through the first light guiding plate 2251, and the supplementary optical source 228 supplies light only to the second region 202 through the second light guiding plate 2252. In order to output information to the second region 202 even in an 'on' state of the main optical sources 227, the supplementary optical source 228 should be driven. However, in case of displaying information only on the second region 202, light is not supplied to the first region 201. This allows the mobile terminal to provide an image of high brightness, using a small number of optical sources (LED lamps).

The main optical sources 227 and the supplementary optical source 228 may be connected to a main board, by being integrated with each other or in a separated manner. Thus, in an embodiment of the present invention, independent control of the main region 201 and the extended region 202 means independent control of the main region 201 and the extended region 202 by the controller 180.

Since the supplementary optical source 228 is positioned on the second side surface 22b, a bezel portion on the second side surface 225b may be increased in size. In case of a large display unit, even if the increased size of the bezel portion due to the supplementary optical source 228 is not greatly influential on an entire size of the mobile terminal. However, in case of a mobile terminal having a small size, the size of the bezel portion is very crucial to determine an entire size of the product.

In order to prevent increase of the size of the bezel portion in a side direction, a dent 224 may be formed by concavely forming the second side surface 225b of the light guiding plate 225 where the supplementary optical source 228 is positioned. Increase of the size of the bezel portion in a side direction may be prevented by positioning the supplementary optical source 228 at the dent 224.

A liquid crystal panel 210 of the display unit 200 has a similar size to the light guiding plate 225. That is, when the dent 224 is provided at the light guiding plate 225, the dent 224 is formed on the same position as the liquid crystal panel 210.

The light guiding plate 225 may be divided into part corresponding to the main region 201, and part corresponding to the extended region 202. However, the liquid crystal panel 210 is configured as a single body to be controlled by a single driving IC. The driving IC is connected to a main board through a flexible board, and applies power to each pixel according to an image signal received from the main board, thereby controlling alignment of liquid crystal.

The liquid crystal panel is an apparatus for implementing images by outputting a different color corresponding to each pixel, after changing an aligned state of liquid crystal by selectively applying power to pixels. As shown in FIG. 2, the display unit 200 composed of the liquid crystal panel and the backlight unit may be disposed on a front surface of the mobile terminal 100, thereby outputting information under control of the controller 180 of the mobile terminal 100.

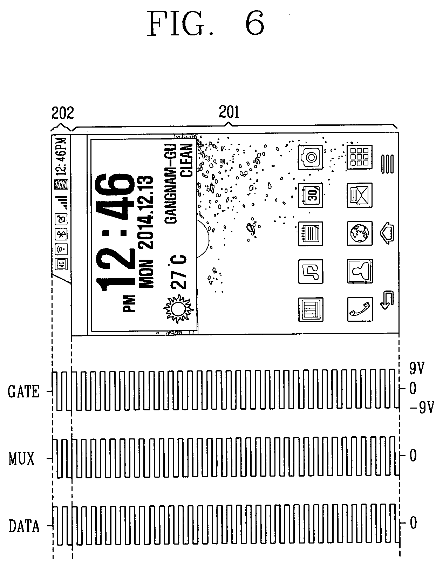

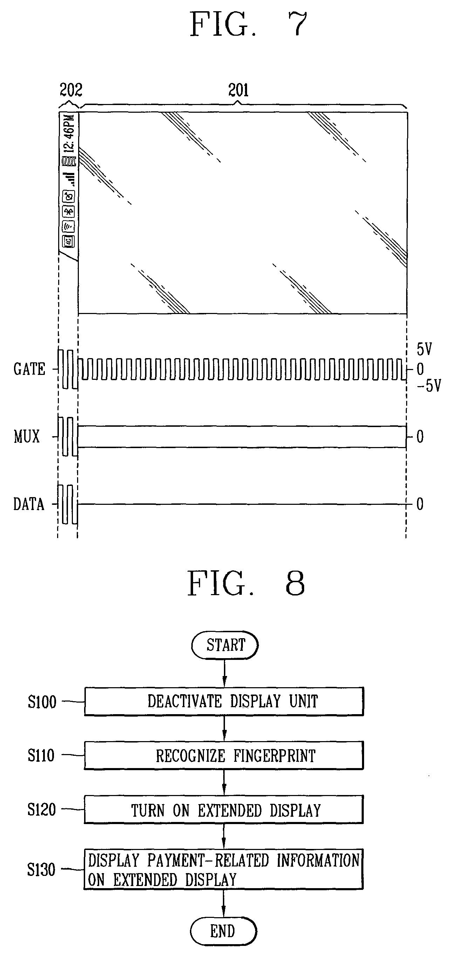

FIGS. 6 and 7 are views illustrating waveforms of signals applied to the liquid crystal panel of the mobile terminal according to an embodiment of the present invention. In an embodiment of the present invention, an operation mode can be defined according to a driving type of the main region 201 and the extended region 202. A first mode indicates a mode where both the main region 201 and the extended region 202 are activated, and a second mode indicates a mode where only the extended mode 202 is activated.

As shown in FIG. 6, in the first mode, a driving IC transmits a gate signal (GATE), a multiplexer signal (MUX) and a data signal (DATA) to the liquid crystal panel, in order to activate both the main region 201 and the extended region 202. The gate signal determines a threshold voltage of a thin film transistor (FET) of each pixel. Thus, a data voltage more than a gate voltage should be applied such that an aligned state of liquid crystal is changed to output images.

A multiplexer is disposed between the driving IC and each transistor. A gate signal (GATE) and a data signal are transmitted through the multiplexer, and the transmitted signals (GATE, DATA) are sequentially re-distributed to be supplied to each transistor. The gate signal is composed of a gate clock and a shit-resistor, and the shit-resistor serves to transmit data received from the gate clock to a next gate. The data signal is a signal for driving the liquid crystal panel according to color information of each pixel. The data signal is applied with a larger voltage than the gate signal, at a region where an aligned state of liquid crystal should be changed, so light supplied from the backlight unit passes through a front surface of the mobile terminal.

As shown in FIG. 7, in the second mode, the driving IC transmits a gate signal (GATE), a multiplexer signal (MUX) and a data signal (DATA) to the liquid crystal panel, in order to activate only the extended region 202. For synchronization, the gate signal (GATE) should be also applied to the main region 201, at predetermined time periods. However, since no data signal is applied to the main region 201, the gate signal may be set to have a small size. For instance, a gate signal of ±9V may be applied to the extended region 202 where an aligned state of liquid crystal is changed according to a data signal, and a gate signal of ±5V may be applied to the main region 201.

Hereinafter, the main region 201 will be referred to as a main display, and the extended region 202 will be referred to as an extended display. The main display and the extended display are integrally formed to constitute the display unit 200. In an embodiment of the present invention, the main display 201 is implemented as a main LCD having a rectangular shape, and the extended display 202 is implemented as an extended LCD having a different shape and size from the main LCD.

The extended display 202 may be extended from at least one side (upper, lower, right or left side) of the main display 201, thereby being formed on the same surface as the main display 201. Alternatively, the extended display 202 may be extended from at least one side (upper, lower, right or left side) of the main display 201, thereby being formed on a different surface from the main display 201 (e.g., formed on an upper surface, a lower surface, a right side surface or left side surface). The extended display may be formed to have a curved surface or a planar surface. In an embodiment of the present invention, an 'off' state of the main display or the extended display is called a 'deactivated' state.

FIG. 8 is a flowchart illustrating a payment method using an extended display of a mobile terminal according to an embodiment of the present invention. As shown in FIG. 8, if a user's input has not been applied for a predetermined time, the controller 180 turns off the display unit 200 (S100). In this instance, between the main display 201 and the extended display 202 of the display unit 200, the extended display 202 displays basic state information (date, time and battery information) while maintaining an always-on state.

In this state, if a user's fingerprint is recognized together with a payment request (S110), the controller 180 activates (turns on) the extended display, and displays payment-related information by fingerprint on the extended display 202 according to a recognized fingerprint (S130). The payment method may include an online payment for purchasing products (online shopping) and executing a payment through the main display 201, and an offline payment for contacting a mobile terminal to a recognizer by a user for payment, or for requesting for a payment as a seller transmits payment information to a purchaser's mobile terminal. The offline payment may include a wireless payment, an NFC payment or a bar code payment.

The payment-related information includes a payment mechanism (e.g., a credit card, a discount card and a coupon) and a payment method. Further, the payment-related information may be a payment result before a finger scan, or a payment result after a finger scan according to a payment type (online or offline payment). The finger scan can be executed through a fingerprint input unit provided on a front surface or a rear surface of the mobile terminal.

In addition, the controller 180 can display additional information on the extended display 202, based on a subsequent input with respect to the displayed payment-related information. Once a user checks the additional information, the controller 180 maintains the always-on state. Upon occurrence of a payment event, the controller 180 notifies the occurrence of the payment event on the extended display 202, together with content of the payment event.

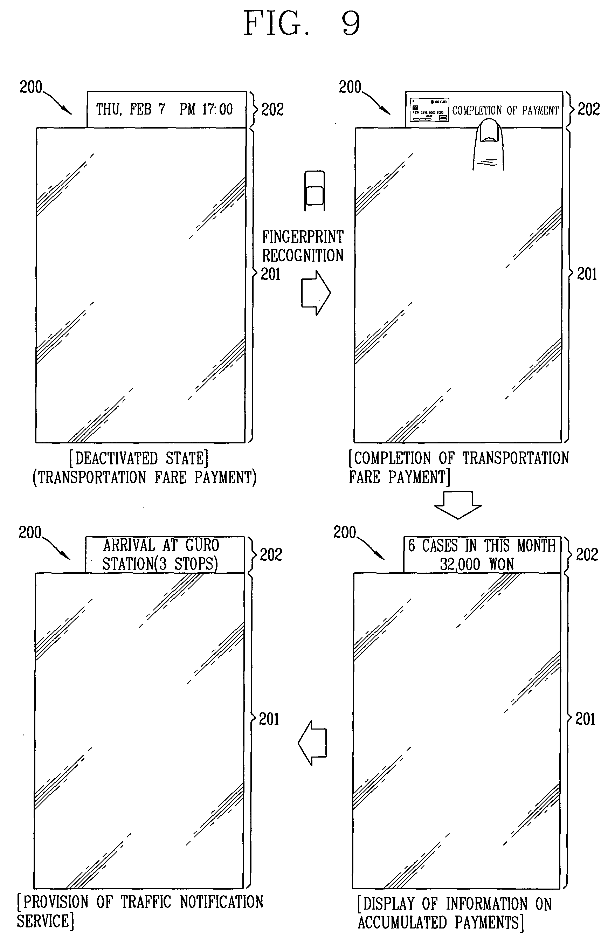

Next, FIG. 9 is a view illustrating an embodiment to display payment related information using the extended display of the mobile terminal according to an embodiment of the present invention. As shown in FIG. 9, in a deactivated state of the main display 201, a user can execute a fare payment using the mobile terminal when getting on a bus.

Then, if a finger of the user contacts the fingerprint input unit provided on the rear surface of the mobile terminal, the controller 180 execute a user authentication process by comparing a fingerprint sensed by the fingerprint input unit with a fingerprint pre-stored in the memory 170. If the user authentication process is successful, the controller 180 provides a feedback on card icons and completion of the payment, to the extended display 202. If the user selects the feedback information, the controller 180 displays information about accumulated payments (the number of cases and the amount of money). The feedback information disappears after being displayed for a preset time.

Then, the controller 180 checks a position of the user through the location information module 115 (e.g., GPS), and recognizes riding information previously-registered by the user, thereby displaying information on a departing position (a stop where the user gets off, an expected arrival time, etc.) on the extended display 202. Also, if the user arrives at the stop, the controller 180 outputs a notification such as a sound or vibrations (feedback).

Thus, if a moving path is stored in the memory 170, the user can check payment information and a total payment amount of money/a total number of cases, through the extended display 202, when using public transportation. Further, the user can be provided with a notification service related to running information and stops, as additional information.

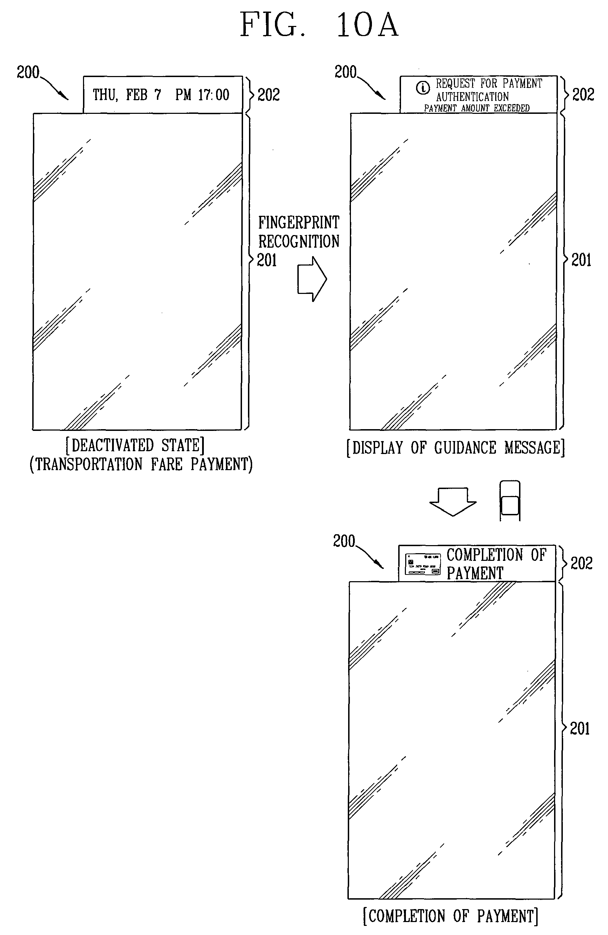

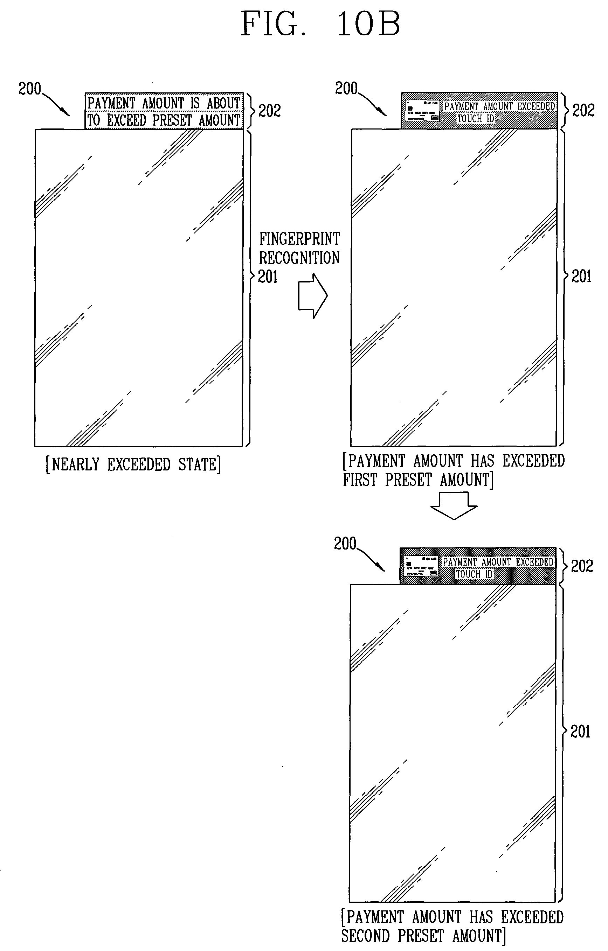

Next, FIGS. 10A and 10B are views illustrating an embodiment to feedback an exceeded state of a preset accumulated amount of money, through the extended display. In more detail, a user can preset a minimum amount of money to be paid on the mobile terminal. If the user contacts the mobile terminal to a recognizer for payment, the controller 180 can output, to the user, whether or not an accumulated amount of money to be paid has exceeded the preset minimum amount of money. That is, the controller 180 compares an accumulated amount of money to be paid, with the preset minimum amount of money. If the accumulated amount of money to be paid exceeds the preset minimum amount of money, the controller 180 displays the exceeded state on the extended display 202, and displays a guide message for payment. The guide message may be output in the form of a text or a voice.

Then, if the user inputs his or her fingerprint through the fingerprint input unit provided on the rear surface of the mobile terminal, the controller 180 provides a feedback on card icons and completion of the payment, to the extended display 202. In an embodiment of the present invention, if a payment amount exceeds a minimum amount set by a user, the guide message in the form of a text may be displayed in a different color, per exceeded amount unit. When the guide message in the form of a voice, a sound of a different level can be output.

As shown in FIG. 10B, when a user executes a payment, the controller 180 can inform the user that an accumulated payment amount is close to a minimum payment amount set by the user. That is, the controller 180 compares an accumulated payment amount with a preset minimum payment amount whenever payment is executed. Also, if the accumulated payment amount is similar to the preset minimum payment amount to some degree, the controller 180 outputs, to the extended display 202, that the accumulated payment amount will soon exceed the preset minimum payment amount.

Then, if the accumulated payment amount exceeds the preset minimum payment amount, the controller 180 outputs a message of a different color per exceeded amount unit, thereby providing a feedback on card icons and the exceeded state. In an embodiment of the present invention, a user sets a payment amount usable for a specific time period, and then is provided with information on the set payment amount.

This allows the user to reduce unnecessary expenditure. However, the present invention is not limited to this. That is, if payment amounts of money per category (films, foods and beverages, department stores and so on) are set to be stored, the controller 180 can feedback whether a corresponding payment amount has exceeded a set payment amount through the extended display 202.

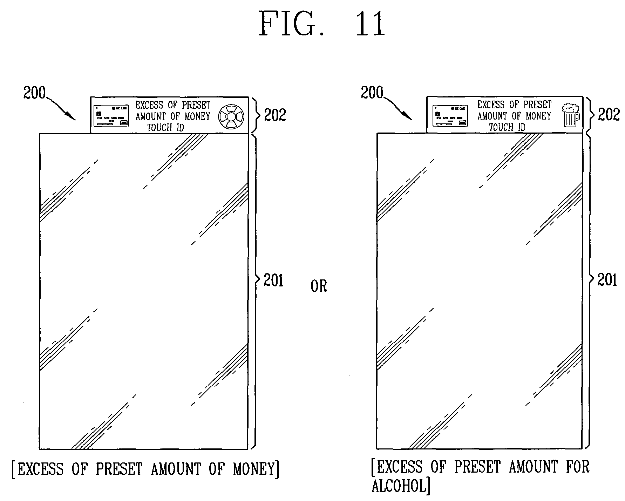

Next, FIG. 11 is a view illustrating an embodiment to feedback an exceeded state of a preset individual amount of money, through the extended display. As shown in FIG. 11, upon occurrence of payment, the controller 180 can check whether a payment amount per object is close to a minimum payment amount preset by a user, and then may notify a result on the check. That is, whenever a payment for an object occurs, the controller 180 compares an accumulated payment amount per object with a preset payment amount per object.

Then, the controller 180 can provide a feedback on an object having an exceeded payment amount, on the extended display 202. The feedback includes a message informing an exceeded payment state, and an icon and a name indicating a payment object. The present invention can thus provide a method for selecting a payment card using an extended display and a finger scan.

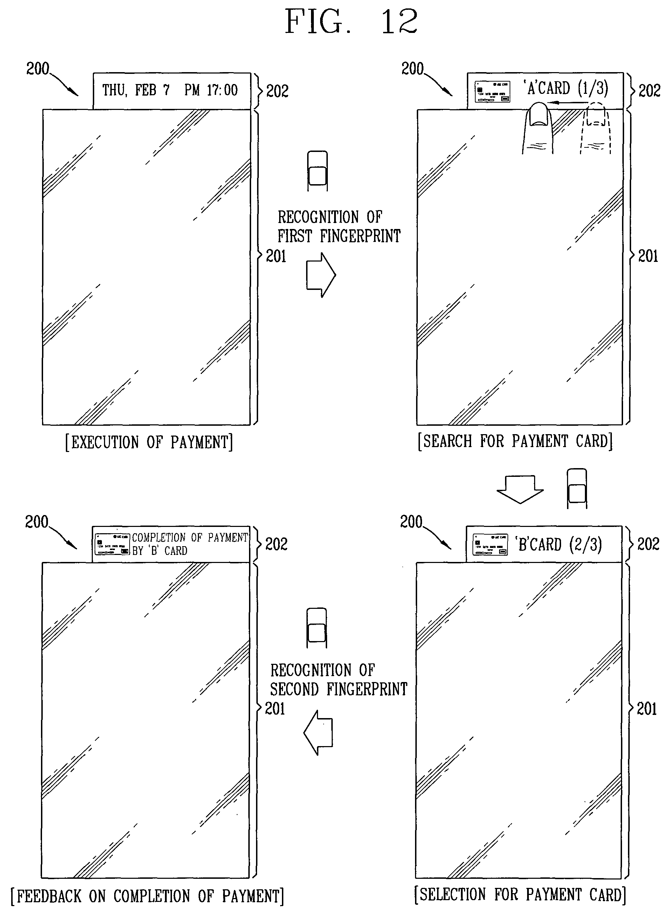

FIG. 12 is a view illustrating card selection and payment using an extended display and a finger scan. As shown in FIG. 12, upon input of a first fingerprint together with a payment request, in an activated state of the extended display 202, the controller 180 displays a preset payment card on the extended display 202. The preset payment card may be a frequently-used payment card. The controller 180 can recognize a user input related to a card search, through the extended display 202. A user can select a payment card to be used by flicking the extended display 202 to search for other cards.

Upon input of a second fingerprint after the selection of the payment card to be used, the controller 180 executes a payment using the selected payment card. Then, the controller 180 outputs a feedback on completion of the payment, to the extended display 202. Thus, in an embodiment of the present invention, payment can be easily executed by searching and selecting a payment card on the extended display, through a finger scan.

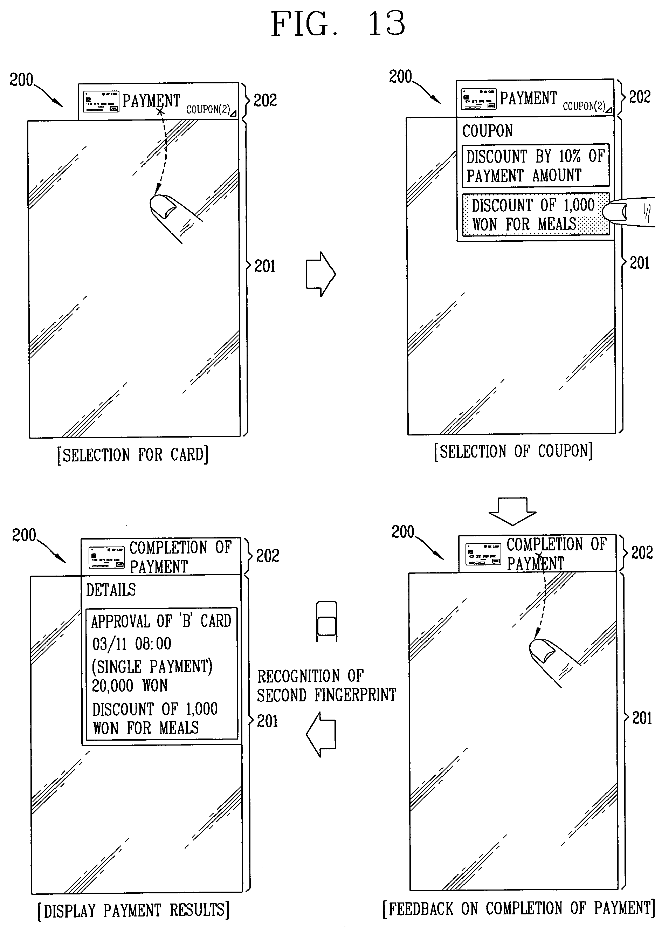

FIG. 13 is a view illustrating an embodiment to use an additional option when performing a card payment using the extended display and a finger scan. A user can select a payment card to be used, on the extended display 202. If a lower region of the extended display 202 is downward dragged or a tilt-up motion of the mobile terminal is sensed, when a payment card to be used is selected on the extended display 202 (refer to FIG. 12), the controller 180 provides additional information such as information on an accumulation card or a coupon, as shown in FIG. 13. The user can execute payment by selecting a predetermined coupon (e.g., discount of 1000 won).

After completion of the payment, if the lower region of the extended display 202 is downward dragged or a tilt-up motion of the mobile terminal is sensed, the controller 180 displays details about the card payment, on the extended display 202. Thus, in an embodiment of the present invention, a user can conveniently use additional information such as information on an accumulation card or a coupon, using the extended display and a finger scan.

Further, an embodiment of the present invention provides a method for a user to select a desired payment scheme through the extended display 202, by registering a plurality of payment methods as favorites (bookmarks). The payment method includes using an accumulation card, using a coupon, and using a credit card, for example.

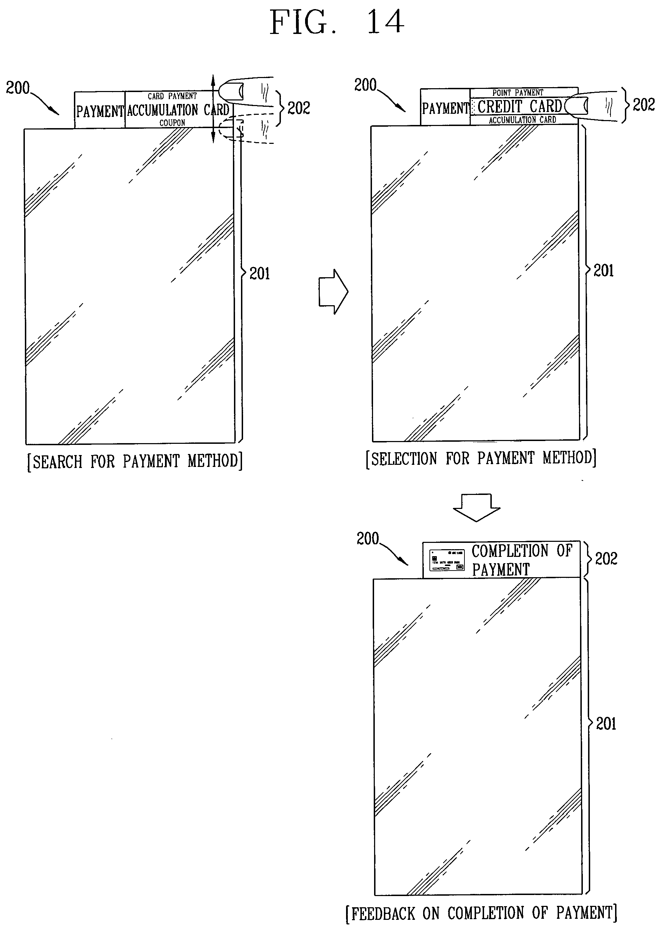

In more detail, FIG. 14 is a view illustrating an embodiment to select a payment method using the extended display and a finger scan. As shown in FIG. 14, once a user executes a payment, the controller 180 checks a payment method registered by the user as a favorite (bookmark). If the user has registered a plurality of payment methods using an accumulation card, a coupon and a credit card, the controller 180 displays a list of the payment methods, on the extended display 202.

The display may be implemented such that the list may be moveable right and left or up and down. For instance, the display may be implemented as a drum picker. The user can select a desired payment method (e.g., a payment method using a credit card), from the list displayed on the extended display 202, thereby executing a card payment.

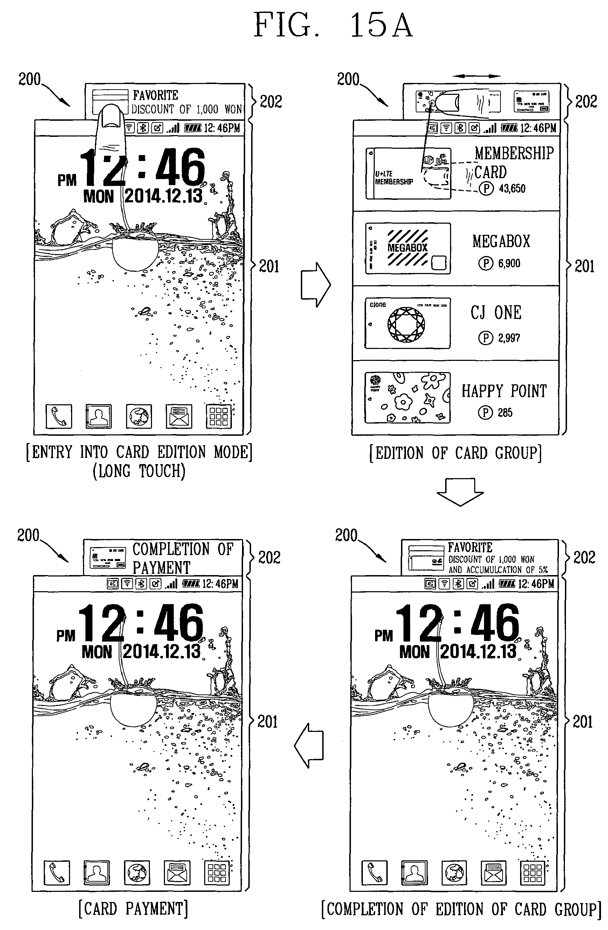

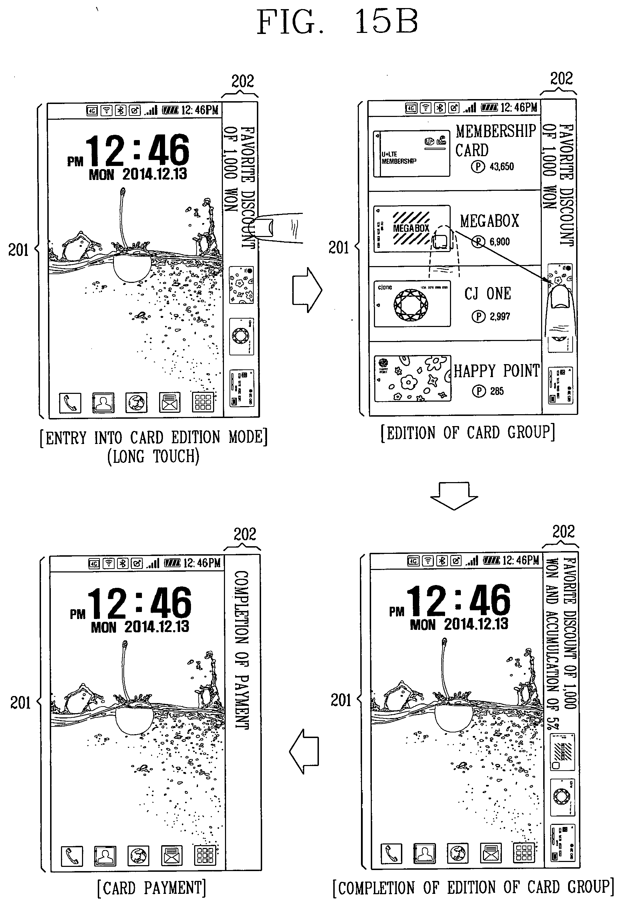

FIGS. 15A and 15B are views illustrating an embodiment to edit a payment card through the extended display according to an embodiment of the present invention. As shown in FIG. 15A, when a user executes a card payment, a card group registered as favorites by the user can be displayed on the extended display 202. If the card group displayed on the extended display 202 is long-touched, the controller 180 enters a card edition mode, and displays pre-registered individual cards on the extended display 202. In addition, the controller 180 displays a list of a plurality of cards on the main display 201.

The user can edit the card group, by deleting the pre-registered cards through search by dragging the displayed list of cards right and left, or by dragging a desired card to the extended display 202 from the main display 201. Upon completion of the card edition, the user executes a payment by selecting a desired card from the extended display 202.

In an embodiment of the present invention, the extended display is extended from one side of the main display, thereby implementing the single display unit 200. Thus, the extended display may be formed by being extended to right and left sides and upper and lower sides of the main display.

FIG. 15B illustrates an example that the extended display 202 is formed by being extended to the right side of the main display 201. In this instance, a length (up/down length) of the extended display 202 may be equal to or smaller than a vertical length of the main display 201. Referring to FIG. 15B, if the card group displayed on the extended display 202 is long-touched, the controller 180 enters a card edition mode. Then, the controller 180 displays pre-registered individual cards on the extended display 202 formed on the right side of the main display 201 in a vertical direction, and displays a list of a plurality of cards on the main display 201.

A user can edit the card group, by deleting the pre-registered cards through search by dragging the displayed list of cards up and down, or by dragging a desired card to the extended display 202 from the main display 201. Upon completion of the card edition, the user executes a payment by selecting a desired card from the extended display 202.

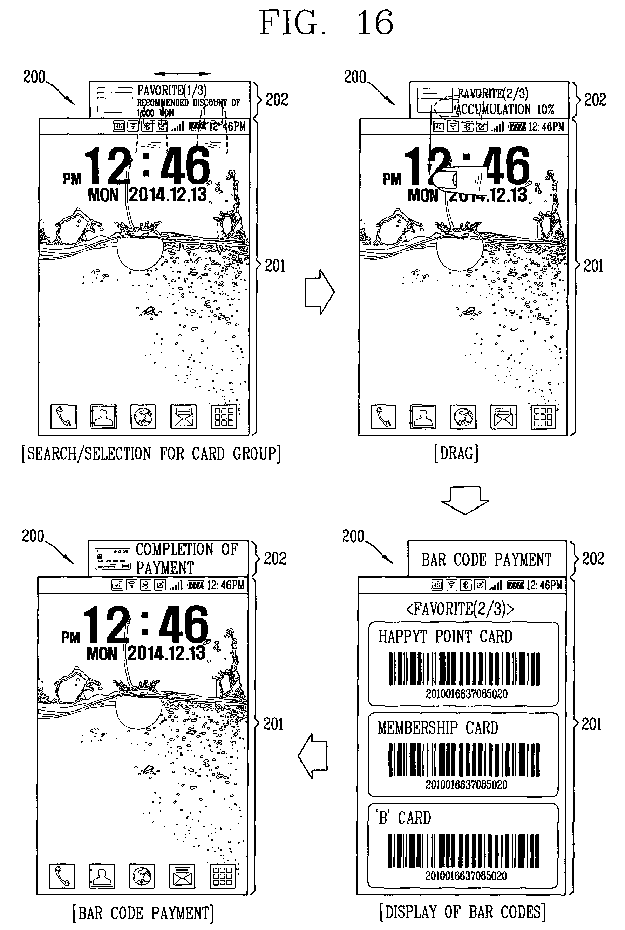

FIG. 16 is a view illustrating an embodiment to execute a payment using a bar code according to an embodiment of the present invention. Referring to FIG. 16, a user can select a specific card group by searching for pre-registered card groups on the extended display 202, through right and left flicking.

Once the selected specific card group is dragged to the main display 201, the controller 180 displays bar codes of corresponding cards, on the main display 201. The user executes a payment by selecting one of the plurality of bar codes displayed on the main display 201. And the controller 180 displays feedback on completion of the payment, on the extended display 202.

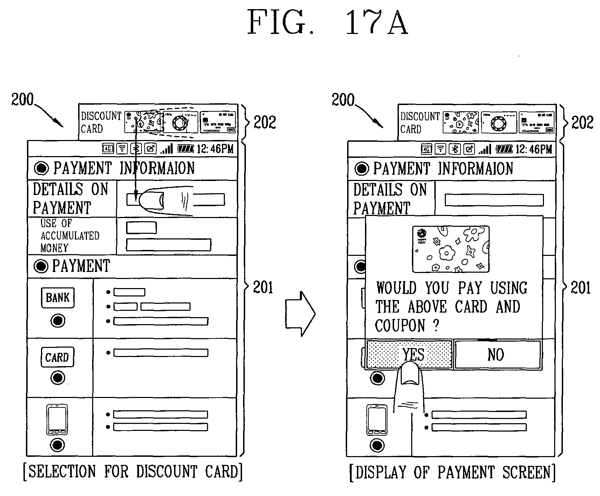

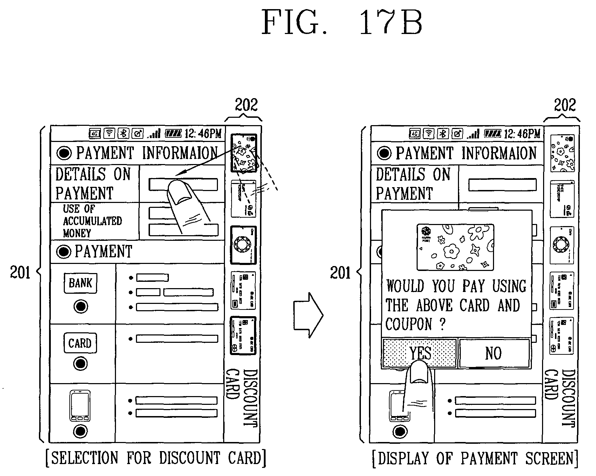

FIGS. 17A to 17C are views illustrating an embodiment to recommend a payment mechanism on the extended display when executing a card payment. As shown in FIGS. 17A and 17B, once a user executes a finger scan after purchasing a product on a mobile shopping mall, the controller 180 searches whether there exists a discount card (or a coupon) suitable for the shopping mall. Then, the controller 180 recommends the searched discount card (or coupon) to the extended display 202. If a specific discount card is selected and then is dragged to the main display 201, the controller 180 displays a payment screen on the main display 201. The user executes a payment using the selected discount card (or coupon), by selecting an `ok' button on the payment screen. A result on the payment is fed-back on the extended display 202 as aforementioned.

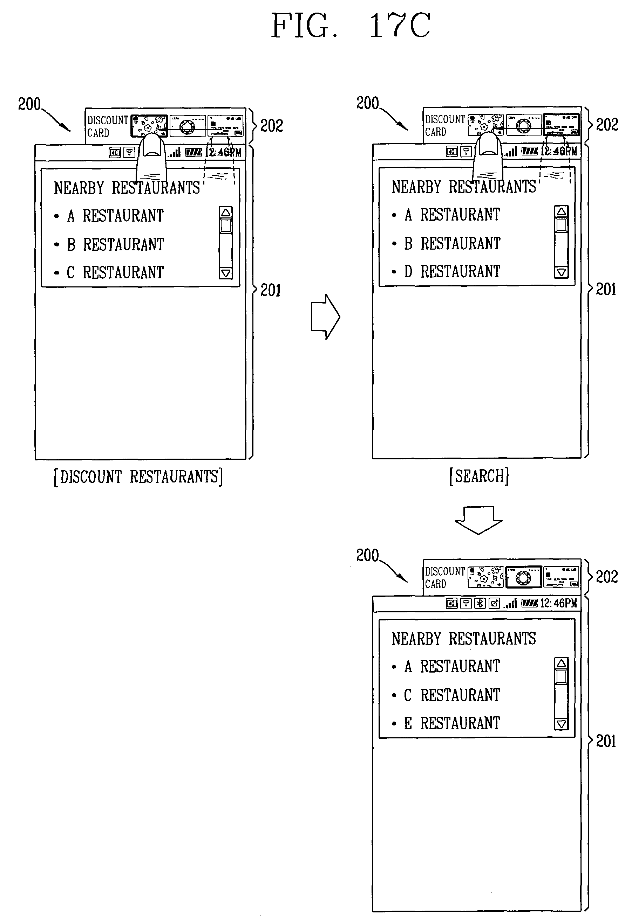

Referring to FIG. 17C, if a nearby restaurant is searched on the main display 201, when a payment mechanism such as a discount card, an accumulation card, and a coupon has been displayed on the extended display 202, the controller 180 searches for a discount restaurant (or a discount shop) based on the displayed payment mechanism. Then, the controller 180 displays the searched discount restaurant (or discount shop), on the main display 201.

If a user moves the payment mechanism (a discount card, an accumulation card, and a coupon) on the extended display 202 by flicking, the controller 180 displays restaurants suitable for each discount card, on the main display 201. Upon selection of a specific discount card, the controller 180 displays restaurants where the specific discount card is usable.

Thus, the user can drag the selected payment mechanism to a corresponding restaurant, thereby executing a payment using the selected payment mechanism (e.g., discount card). Details of the selected payment mechanism (e.g., discount card), e.g., a discount period and a discount percentage (%) may be viewed as a lower end of the extended display 202 is downward dragged or as the selected payment mechanism is clicked.

In another embodiment of the present invention, if a specific restaurant is selected when nearby restaurants have been displayed on the main display 201, based on position information, discount cards (or accumulation cards, coupons) usable in the selected restaurant may be displayed on the extended display 202 for payment.

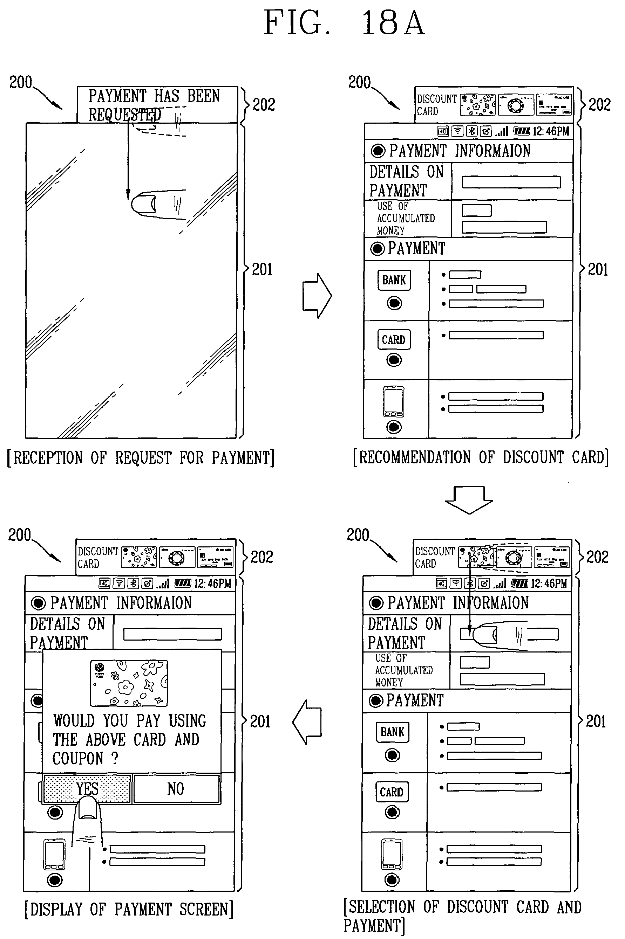

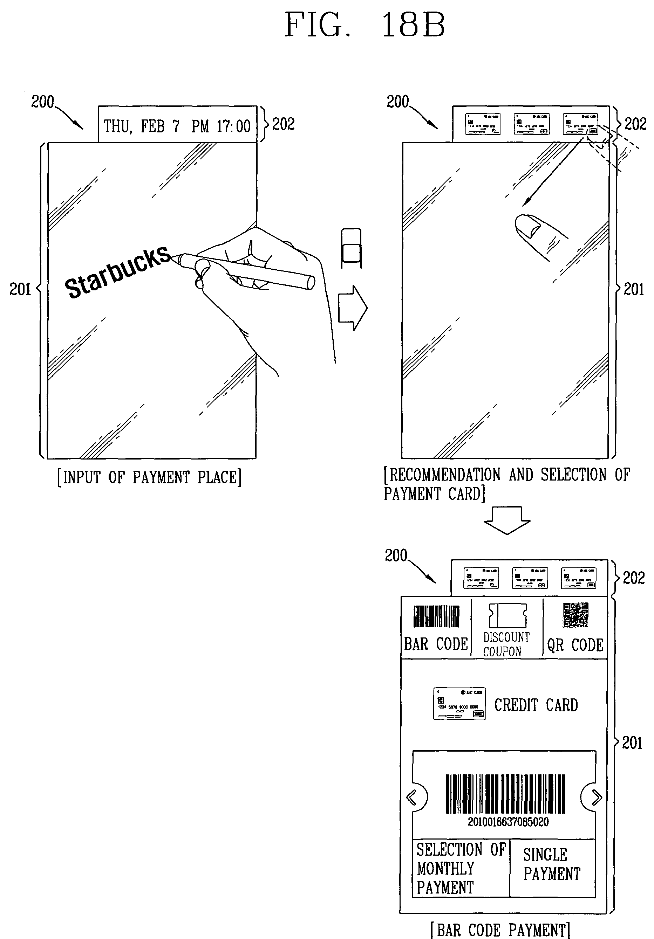

FIGS. 18A and 18B are views illustrating another embodiment to recommend a payment mechanism on an extended display, in correspondence to a card payment request method. Generally, a payment request event may occur by wirelessly receiving payment information from the outside (restaurant, café, store and so on), or through a bar code contact. That is, when a user purchases a product offline, a seller may transmit a payment fare to a mobile terminal of the user. As the seller displays the payment fare after converting it into a predetermined type (e.g., bar code type), the user can receive a payment request by contacting the mobile terminal to the bar code.

Upon occurrence of the payment request event, the controller 180 displays the event on the extended display 202. If the user drags the extended display 202 to the main display 201, the controller 180 activates the main display 201, and displays details on payment on the main display 201. And the controller recommends, on the extended display 202, a discount card, an accumulation card and a coupon which can be used in a place where the payment request event has occurred (e.g., restaurant, café, store and so on).

Thus, the user executes a payment by selecting one of the discount card, the accumulation card and the coupon, and by dragging the selected one to the main display 201. The payment with respect to the payment request event may be executed as the user selects a payment card on the mobile terminal, or as the user converts a credit card into a bar code type to contact the converted credit card onto a payment machine of the seller.

As shown in FIG. 18B, in a deactivated state ('off' state) of the main display 201, if a user executes a finger scan after writing down "Starbucks" on the main display 201, the controller 180 provides information on recommended cards and discount cards suitable for "Starbucks", on the extended display 202. If the user selects a specific card and drags the selected card to the main display 201, the controller 180 converts the selected card into a bar code and displays the bar code. Thus, the user contacts the converted bar code to a bar code recognizer provided at "Starbucks", thereby executing a card payment.

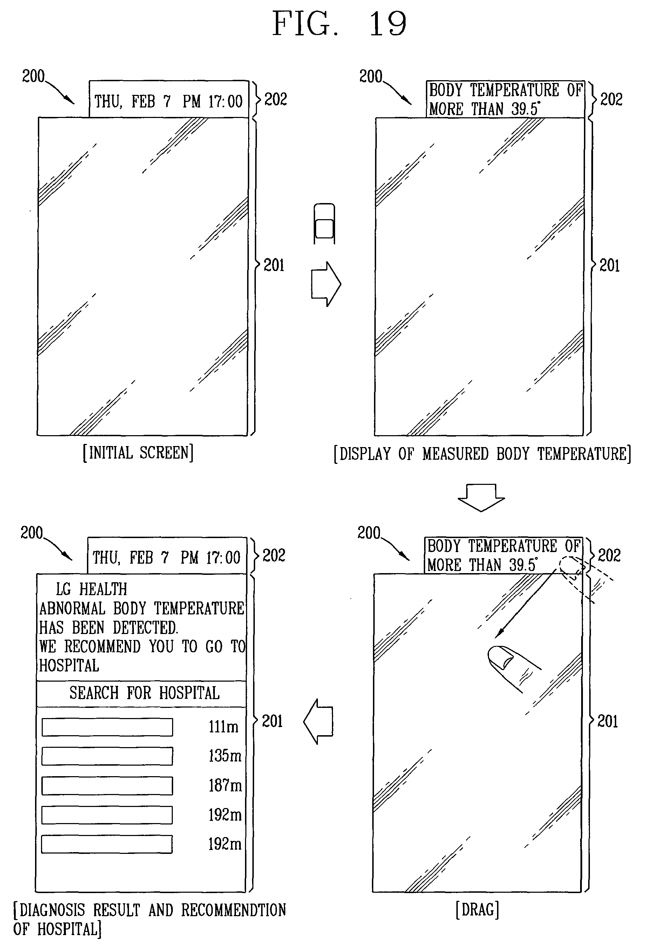

FIG. 19 is a view illustrating an embodiment to display bio information sensed through a finger scan, on the extended display. The display unit 200 is turned off in a screen deactivated state, and the extended display 202 displays basic information (date, day and time) in an always-on state. In this state, if a user inputs a fingerprint through the fingerprint input unit provided on the rear surface of the mobile terminal, the controller 180 measures bio information (temperature, pulsation) of the user, and displays the measured bio information on the extended display 202.

If the user drags the bio information displayed on the extended display 202 (e.g., temperature) to the main display 201, the controller 180 displays, on the main display 201, a diagnosis result and hospital information on the measured temperature. Thus, the user can conveniently check the bio information on the extended display 202, and may check detailed diagnosis information on the main display 201 if necessary. This may reduce power consumption by the main display.

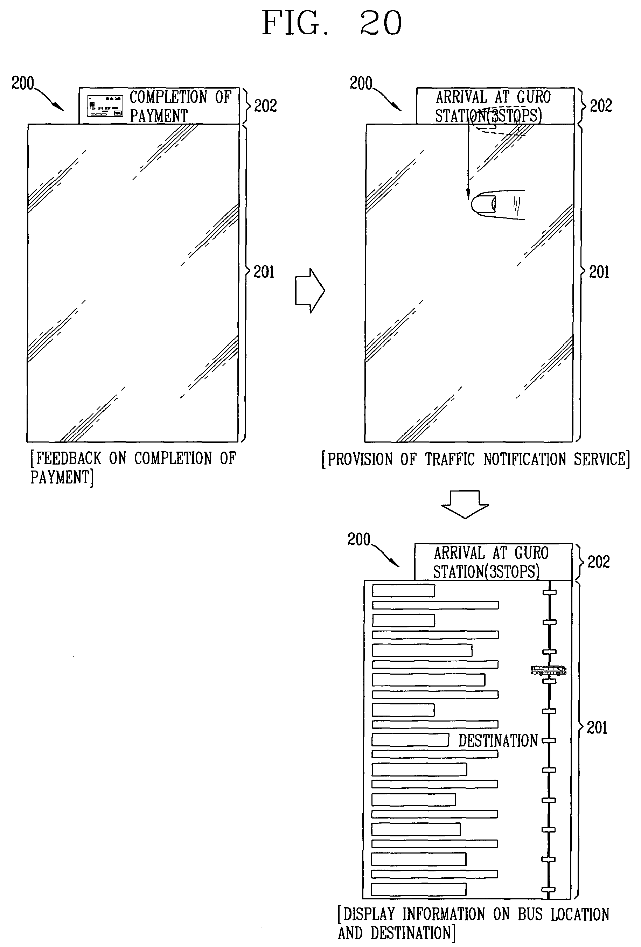

FIG. 20 is a view illustrating an embodiment to provide traffic information on a destination, through the extended display according to an embodiment of the present invention. As shown in FIG. 20, if a user pays a public transportation fare (e.g., bus fare) using the mobile terminal and executes a finger scan on the mobile terminal, the controller 180 feeds-back a completed state of the payment to the extended display (refer to FIG. 9).

Then, the controller 180 can display notification information (e.g., arrival at 'Guro' station) on the extended display 202, before arrival at a destination, based on a moving path registered by the user and position information of the user (e.g., GPS information). Then, the controller 180 can output a voice and vibrations through the audio output unit 152 and the haptic module 153. If the user drags the notification information to the main display 201, the controller 180 activates the main display 201, and displays, on the main display 201, map information indicating a current position and the destination.

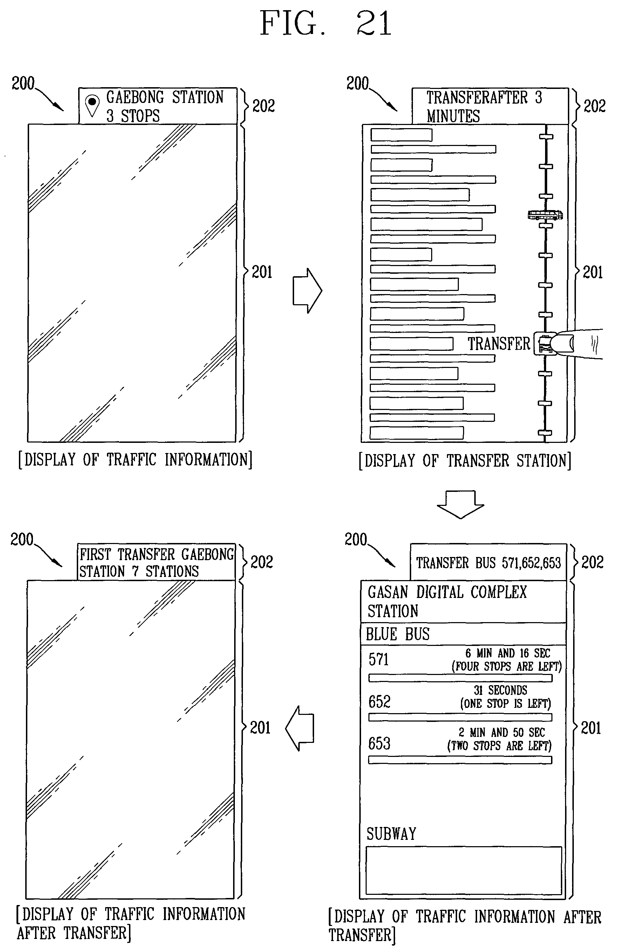

FIG. 21 is a view illustrating an embodiment to provide traffic information on a destination including a transfer station, through the extended display according to an embodiment of the present invention. As shown in FIG. 21, the controller 180 provides traffic information to the extended display 202, based on a moving path registered by a user and position information of the user (e.g., GPS information). The traffic information may include a current position, a transfer station, an expected arrival time, etc., and may display all stations or may display stations at predetermined intervals.

If the traffic information displayed on the extended display 202 is dragged to the main display 201 by the user, the controller 180 activates the main display 201, and displays, on the main display 201, map information indicating a current position, each station and a transfer station. The displayed map information disappears when touched by the user, or automatically disappears after a predetermined time lapses.

If an icon indicating a transfer station is selected from the map information, the controller 180 displays information on a transportation mechanism (bus, subway) which can be used in the transfer station (e.g., number and an expected arrival time). Then, upon sensing of an input to check the traffic information, the controller 180 deactivates the main display 201, and then continuously provides traffic information (e.g, traffic information after transfer) on the extended display 202.

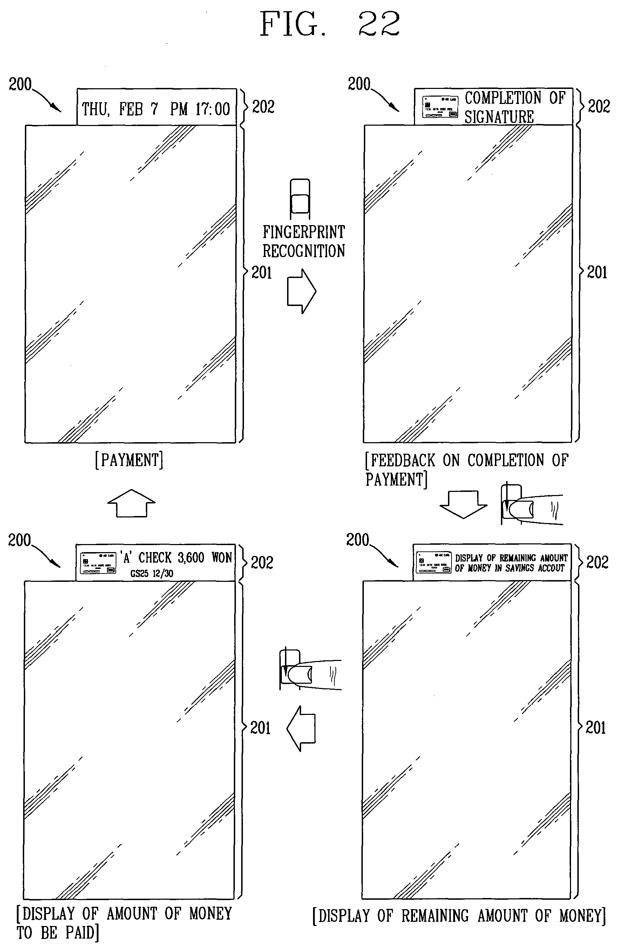

FIG. 22 is a view illustrating an embodiment to check details on payment through a finger scan. As shown in FIG. 22, if a user pays executes a payment using the mobile terminal and executes a finger scan on the fingerprint input unit provided on the rear surface of the mobile terminal, the controller 180 feeds-back a completed state of the payment to the extended display 202, together with card icons.

Then, when a finger of the user has contacted the fingerprint input unit, if the user downward moves the finger, the controller 180 displays, on the extended display 202, details on previous payments, a remaining amount of money, a total amount of money to be paid, etc., in the form of an animation which downward moves (toggles). Then, if the user moves the finger to an opposite direction, the details on the previous payments, the remaining amount of money, the total amount of money to be paid, etc. may be displayed in a reverse direction to the previous direction.

Such a toggle operation is equally applied to all information displayed on the extended display 202. If the user moves the finger which has contacted the fingerprint input unit right and left, information displayed on the extended display 202 is moved right and left. The information is displayed only when the user contacts his or her finger to the fingerprint input unit, and automatically disappears when the user separates the finger from the fingerprint input unit. The user can execute a different payment operation by registering a different payment method to a different fingerprint, and by determining a type of a fingerprint input by himself or herself.

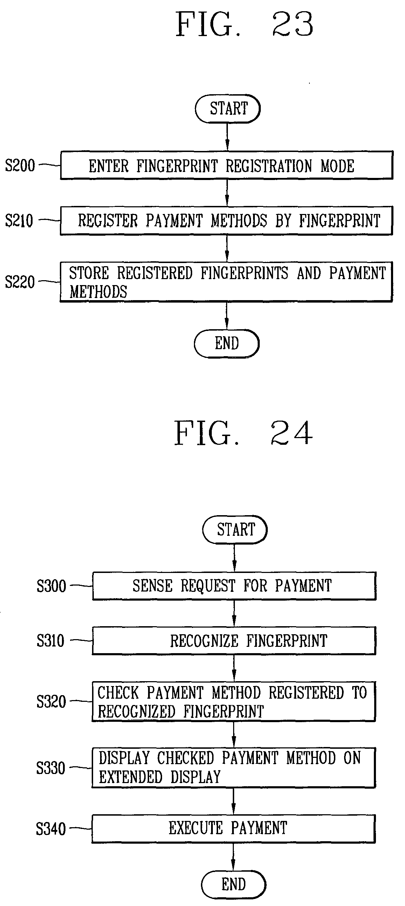

FIG. 23 is a flowchart illustrating registration of payment methods by fingerprint in a mobile terminal according to an embodiment of the present invention. As shown in FIG. 23, once a fingerprint registration menu is selected, the controller 180 enters a fingerprint registration mode (S200). In the fingerprint registration mode, a user can input a plurality of fingerprints using a plurality of fingers, and register different payment methods with respect to the respective input fingerprints (S210).

The payment methods may be set in the form of a single fingerprint (fingerprint A), combined fingerprints (fingerprint A + fingerprint B), a composite fingerprint (fingerprint + signature), etc. The registered fingerprints and payment methods are stored in the memory 170 (S220).

FIG. 24 is a flowchart illustrating a payment method using the extended display and a finger scan, in a mobile terminal according to an embodiment of the present invention. As shown in FIG. 24, upon occurrence of a payment event, a user inputs a fingerprint to the fingerprint input unit provided on the rear surface of the mobile terminal. The occurrence of the payment event includes when a payment screen has been displayed on the main display 201, and when a payment request received from the outside has been displayed on the extended display 202.

The controller 180 recognizes the input fingerprint, and then checks whether there exists a payment method registered to the recognized fingerprint in the memory 170 (S300, S310). If there exists a payment method registered to the recognized fingerprint, the controller 180 displays the payment method on the extended display 202, and executes a payment by the payment method (S320, S330).

Thus, in an embodiment of the present invention, payment may be executed conveniently without an additional menu selection, through a simple finger scan. Hereinafter, various payment methods through a finger scan will be explained in more detail with reference to the attached drawings.

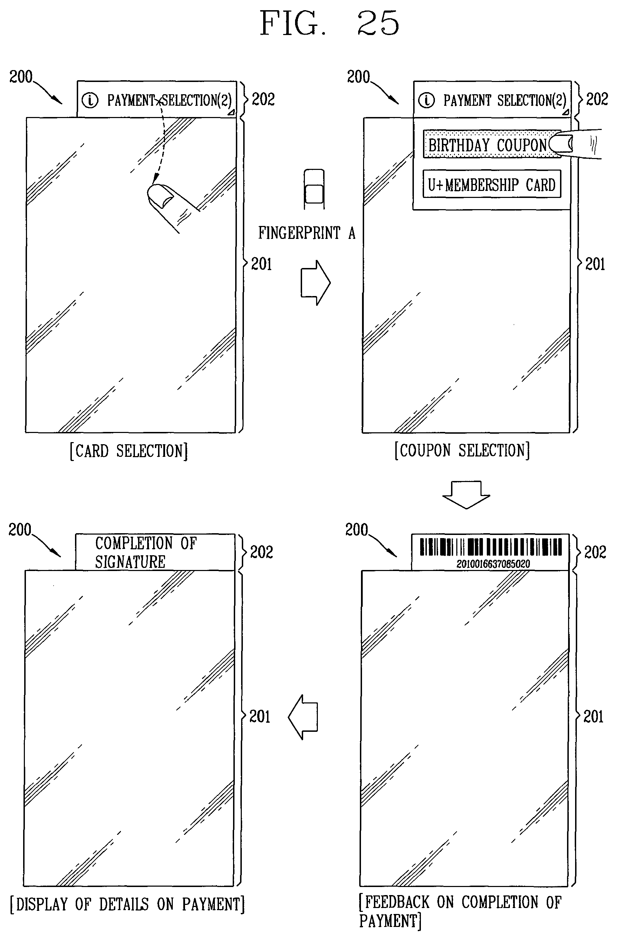

In particular, FIG. 25 is a view illustrating an embodiment to execute a bar code payment through a finger scan according to an embodiment of the present invention. A user can execute payment using a previously-registered fingerprint. Upon recognition of a fingerprint 'A' registered in advance, the controller 180 provides a pre-registered payment method to the extended display 202. If the user downward drags a lower region of the extended display 202 or makes a tilt-up motion with mobile terminal, the controller 180 provides details on payment items (coupon, membership card) which can be selected by the user.

Once the user selects a specific item, the controller 180 converts the selected item into a bar code, and displays the bar code on the extended display 202. The user executes a payment by contacting the bar code onto a recognizer. Upon completion of the bar code recognition, the controller 180 displays feedback on completion of the payment, on the extended display 202. Thus, in an embodiment of the present invention, payment may be conveniently executed through the extended display 202 and a finger scan.

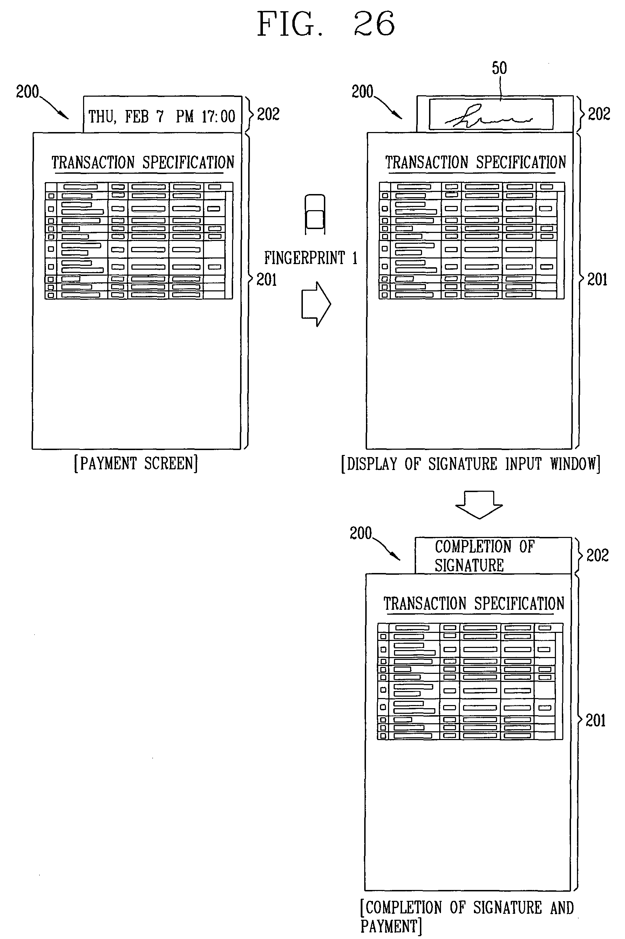

FIG. 26 is a view illustrating an embodiment to execute a signature payment using a fingerprint according to an embodiment of the present invention. A user can register a signature payment method to a fingerprint B. When a transaction specification for payment has been displayed on the main display 201, if the fingerprint 'B' is recognized, the controller 180 displays a signature input window 50 on the extended display 202. Upon input of a signature of the user to the signature input window 50, the controller 180 displays a result on a signature recognition on the extended display 202, and executes a payment.

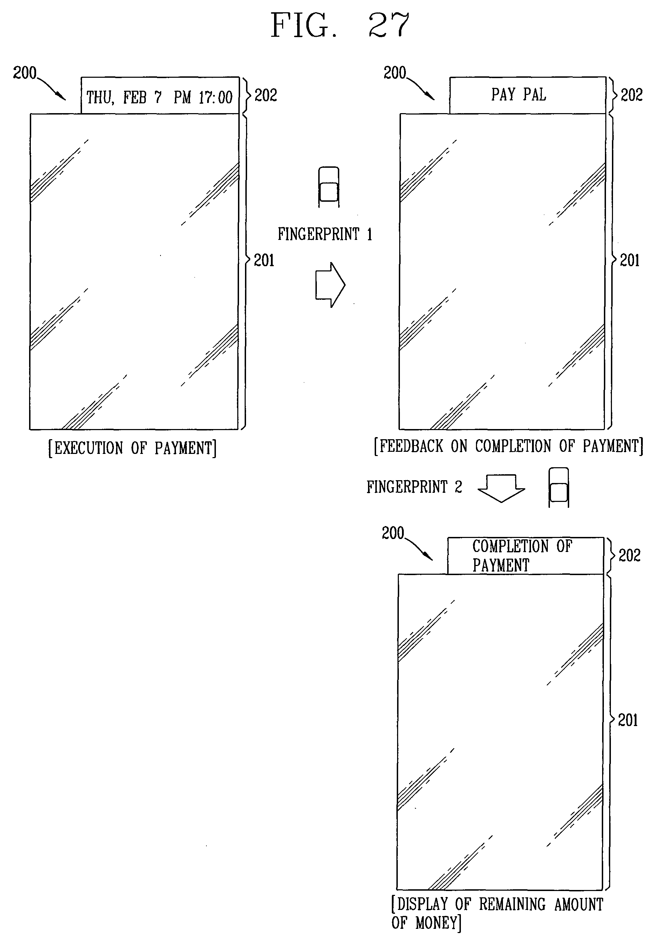

FIG. 27 is a view illustrating an embodiment to execute an Internet payment through a finger scan according to an embodiment of the present invention. If a user contacts the mobile terminal onto a recognizer for payment when a finger of the user has contacted onto the fingerprint input unit of the mobile terminal, or if fingerprint 1 is recognized when an event occurrence screen has been displayed, the controller 180 displays, on the extended display 202, an Internet payment service method registered to the fingerprint 1, e.g., 'PayPal'. Then, upon recognition of fingerprint 2, the controller 180 executes a payment through the Internet payment method displayed on the extended display 202, and feeds-back a result on the payment to the extended display 202.

In an embodiment of the present invention, when contacting the mobile terminal to a recognizer for payment in a screen locked state, or when executing a payment on a screen of the mobile terminal, both a locked state releasing function and a payment screen displaying function can be executed. That is, both a locked state releasing function and a payment screen displaying function may be set to a single fingerprint.

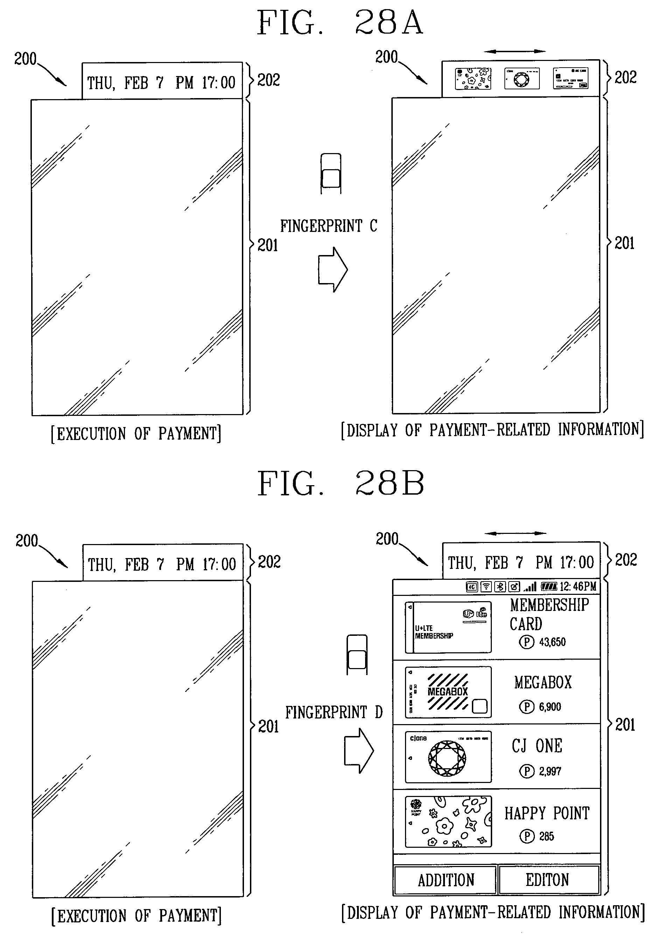

In more detail, FIGS. 28A and 28B are views illustrating to execute both a locked state releasing function and a payment screen displaying function, through a finger scan, according to an embodiment of the present invention. If a user contacts the mobile terminal to a recognizer for payment, or if the user executes a payment on a payment screen, a lock state of a lock screen may be released through recognition of fingerprint 1 pre-registered by the user.

As shown in FIGS. 28A and 28B, upon recognition of another fingerprint pre-registered by a user, a locked state of a lock screen may be released, and payment-related information may be displayed. The payment-related information may include one of a payment method (card, bar code, Internet payment and so on), a card type, and a payment screen. The payment-related information may be displayed on the extended display 202 or the main display 201. For instance, upon recognition of fingerprint 'C', the controller 180 can display the payment-related information on the extended display 202. And upon recognition of fingerprint 'D', the controller 180 can display the payment-related information on the main display 201.

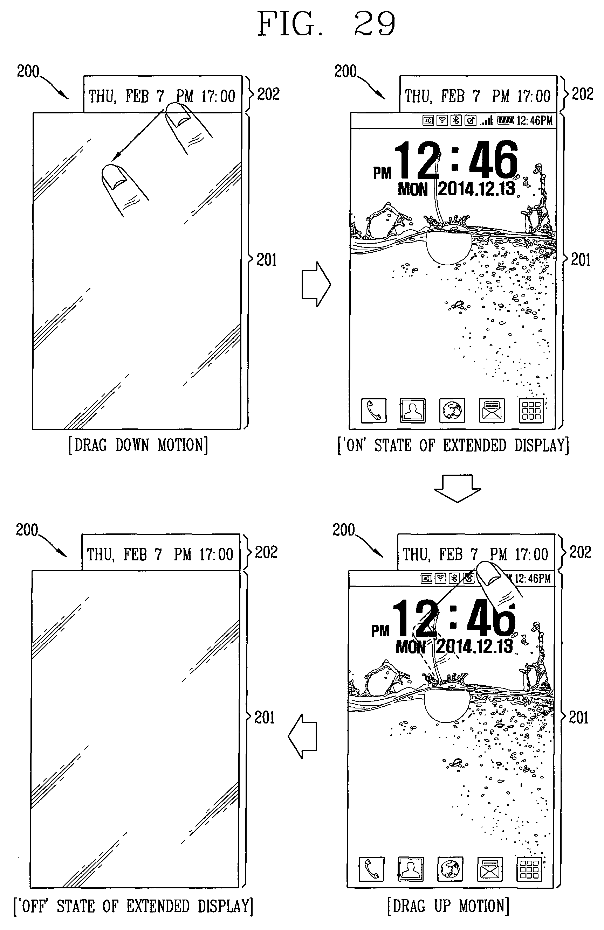

FIG. 29 is a view illustrating an embodiment to enter a lock screen using the extended display according to an embodiment of the present invention. As shown in FIG. 29, the extended display 202 displays basic state information (date, time and battery information). If a user touches the extended display 202 and drags the extended display 202 to the main display 201 by a first distance, the controller 180 activates the extended display 202, and then displays a lock screen.

The time information on the extended display 202 is displayed on the lock screen in an enlarged manner. In this state, if the user touches the time information displayed on the lock screen and drags the time information to the extended display 202, the main display 201 is deactivated, and the time information displayed on the lock screen is displayed on the extended display 202.

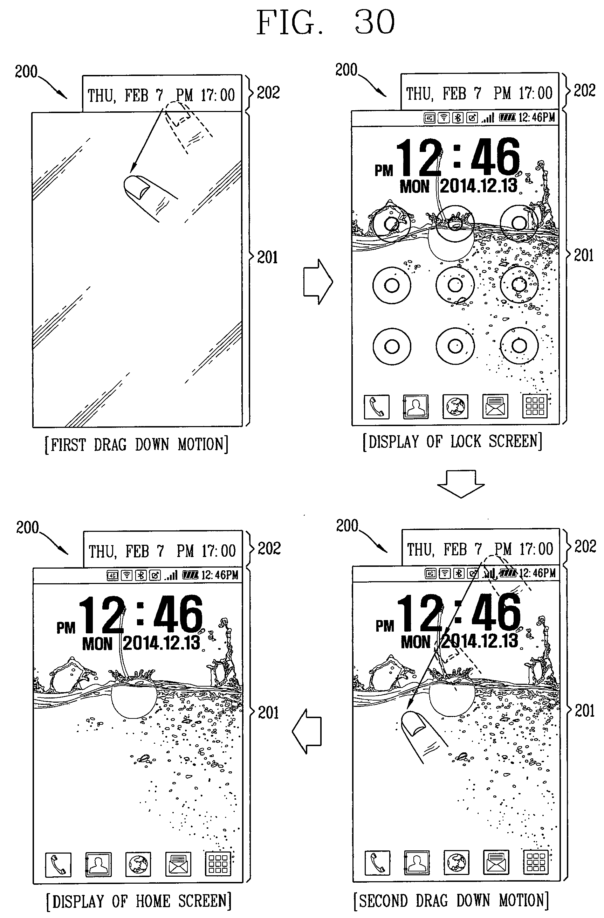

FIG. 30 is a view illustrating an embodiment to enter a lock screen and to release a locked state of the lock screen using the extended display according to an embodiment of the present invention. As shown in FIG. 29, if a user touches the extended display 202 and drags the extended display 202 to the main display 201 by a first distance, the controller 180 activates the extended display 202, and displays a lock screen.

In this state, if the user continues to drag the extended display 202 by a second distance, the controller 180 releases a locked state of the lock screen, and displays a home screen on the main display 201. Thus, in an embodiment of the present invention, a user can sequentially enter a lock screen and a home screen, using the extended display.

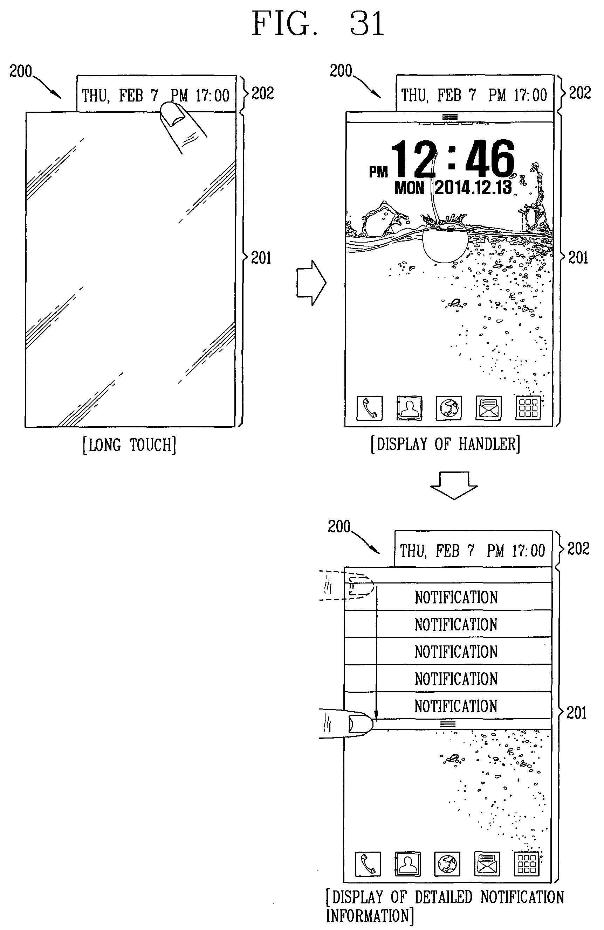

FIG. 31 a view illustrating an embodiment to check notification information using the extended display according to an embodiment of the present invention. Generally, upon occurrence of a notification event (a call or reception of a message), the occurred notification event is displayed on the extended display 202.

When basic information has been displayed on the extended display 202, if a user long-touches the extended display 202, the controller 180 displays a handler 51 on an upper end of the main display 201. And if the user drags-down the handler 51, the controller 180 displays a plurality of notification information according to a dragged distance.

Thus, the present invention has the following advantages. As aforementioned, payment-related information is displayed on the extended display through a finger scan during an online/offline payment, and a different payment method is provided according to a type of a recognized fingerprint. Thus, the user can conveniently execute a payment without entering an additional menu mode or selecting an additional menu.

Further, when the user pays for a transportation fare, traffic information is displayed on the extended display, based on a moving path and position information of the user (e.g., GPS information). Thus, the user can be provided with an additional information service. Further, since payment-related information is displayed on the extended display through a finger scan, the battery consumption by the main display is reduced.

Various embodiments may be implemented using a machine-readable medium having instructions stored thereon for execution by a processor to perform various methods presented herein. Examples of possible machine-readable mediums include HDD (Hard Disk Drive), SSD (Solid State Disk), SDD (Silicon Disk Drive), ROM, RAM, CD-ROM, a magnetic tape, a floppy disk, an optical data storage device, the other types of storage mediums presented herein, and combinations thereof. If desired, the machine-readable medium may be realized in the form of a carrier wave (for example, a transmission over the Internet). The processor may include the controller 180 of the mobile terminal.

As the present features may be embodied in several forms without departing from the characteristics thereof, it should also be understood that the above-described embodiments are not limited by any of the details of the foregoing description, unless otherwise specified, but rather should be construed broadly within its scope as defined in the appended claims, and therefore all changes and modifications that fall within the metes and bounds of the claims, or equivalents of such metes and bounds are therefore intended to be embraced by the appended claims.

## Claims

1. A mobile terminal (100), comprising:
a main display (201);
an extended display (202) extended to at least one side of the main display (201), and forming a single display together with the main display (201);
a fingerprint input unit configured to input a fingerprint; and
a controller (180) configured to:
deactivate the main display (201), and
display payment-related information related to a payment made with the mobile terminal on the extended display (202) while maintaining the deactivation of the main display (201), in response to a fingerprint input on the fingerprint input unit.

2. The mobile terminal of claim 1, wherein the controller (180) is further configured to independently activate and deactivate the main display (201) and the extended display (202).

3. The mobile terminal of claims 1 and 2, wherein the extended display (202) is formed on a same plane as the main display (201), or is formed on a different surface from the main display (201) by being extended from the main display toward one side, and
wherein the extended display (202) has a planar surface or a curved surface.

4. The mobile terminal of anyone of claims 1 through 3, wherein the payment-related information includes a payment mechanism and a payment method, and
wherein the payment mechanism includes at least one of a credit card, a discount card and a coupon,
wherein the payment method includes at least one of a card payment, a bar code payment, a signature payment and an Internet payment.

5. The mobile terminal of anyone of claims 1 through 4, wherein the payment includes one of an online payment and an offline payment, and
wherein the offline payment corresponds to a wireless payment, an NFC payment or a bar code payment.

6. The mobile terminal of anyone of claims 1 through 5, wherein the controller (180) is further configured to display the payment-related information and an accumulated amount of money on the extended display (202) for a transportation fare payment, and display traffic information on a destination based on a pre-registered moving path.

7. The mobile terminal of anyone of claims 1 through 6, wherein the controller (180) is further configured to display different payment mechanisms on the extended display (202) according to different fingerprints input on the fingerprint input unit, and additionally display a discount card and a coupon according to a payment place.

8. The mobile terminal of anyone of claims 1 through 7, wherein in response to a touch and drag motion from the extended display (202) to the main display (201), the controller (180) is further configured to display a payment signature screen or a bar code screen on the extended display (202) according to a selected payment type.

9. The mobile terminal of anyone of claims 1 through 8, wherein in response to a payment place being input to the main display (201) and then a fingerprint being input to the main' display(201), the controller (180) is further configured to display a payment mechanism usable in the payment place on the extended display (202).

10. The mobile terminal of anyone of claims 1 through 9, wherein the controller (180) is further configured to move the payment-related information displayed on the extended display up and down or right and left in response a finger corresponding to the fingerprint moving in corresponding directions on the fingerprint input unit.

11. The mobile terminal of claim 1, further comprising:
a memory (170) configured to store a relationship between different payment methods and fingerprints of different fingers of a user.

12. A method of controlling a mobile terminal including a main display (201) and an extended display (202) extended to at least one side of the main display (201), and forming a single display together with the main display (201), the method comprising:
deactivating (S100), via a controller, the main display (201); and
displaying (S110∼S130) payment-related information related to a payment made with the mobile terminal on the extended display (202) while maintaining the deactivation of the main display (201), in response to a fingerprint input on the fingerprint input unit.

13. The method of claim 12, further comprising:
independently, via the controller (180), activating and deactivating the main display (201) and the extended display (202).

14. The method of claims 12 and 13, wherein the extended display (202) is formed on a same plane as the main display (201), or is formed on a different surface from the main display (201) by being extended from the main display toward one side,
wherein the extended display (202) has a planar surface or a curved surface.

15. The method of anyone of claims 12 through 14, wherein the payment-related information includes a payment mechanism and a payment method,
wherein the payment mechanism includes at least one of a credit card, a discount card and a coupon,
wherein the payment method includes at least one of a card payment, a bar code payment, a signature payment and an Internet payment,
wherein the payment includes one of an online payment and an offline payment, and
wherein the offline payment corresponds to a wireless payment, an NFC payment or a bar code payment.
